# EUROPEAN PATENT APPLICATION

(11) **EP 1 933 530 A2**
(43) Date of publication of application: **18.06.2008**
(21) Application number: 07254078.4
(22) Date of filing: 16.10.2007
(51) Int. Cl.: H04L 29/06

(54) **Information distribution system, information distribution apparatus and information distribution method**

(30) Priority: 11.12.2006 JP 2006332816
(71) Applicant: Realcom, INC, 4-4 Yanagibashi 1chome, Taito-ku Tokyo 111-0052 (JP)
(72) Inventor: Ishikawa, Yuuki, c/o Realcom Inc., Tokyo 111-0052 (JP)
(74) Representative: Jones, Ithel Rhys

(57) **Abstract**

An information distributionsystemisdisclosed which provides information useful to users through suitable information filtering. The information distribution system has an aggregation feed control means which performs a redirection processing on the feed acquired and aggregates a plurality of the feeds subjected to the redirection processing to generate a aggregated feed, a browsing history database which stores browsing histories according to browse request for each of the feeds from a user, and a recommendation feed control means which generates a recommended feed based on the browsing histories of a plurality of users having similar browsing histories on each feed.

## Description

### BACKGROUND OF THE INVENTION

### 1. Field of the Invention

The present invention relates to an information distribution system, an information distribution apparatus, and an information distribution method for providing information that is useful to users through information filtering functions that are suitable to user preferences.

### 2. Description of the Related Art

People in a network of human relationships naturally separate pieces of information that they deem to be necessary from ones they deem to not be necessary. Information is thus organized and classified by people themselves.

Meanwhile, the Internet (WEB) is flooded with an infinite number of pieces of information in an almost disorganized fashion, and it is difficult for users to practically select information of interest from these innumerable pieces of information and collect the information they want or need. The presence of an indefinite number of information sources (such as WEB sites) also makes it difficult to determine which information has high reliability and which has low reliability, imposing an unnecessary burden on users. For example, when a search engine is used for a keyword search, users must select desired pieces of information from a plurality of information sources that are retrieved in order to select information of high reliability. Consequently, users cannot access useful information efficiently.

From the viewpoint of information providers, however, the highly reliable useful information they provide to users may only be of low information values with hindered information propagation unless the information can be accessed by users.

Information filtering includes making a determination on the reliability or usefulness of information. Aside from users' own decisions, this determination tends to depend greatly on whether or not the information is recommended by other users, acquaintances, or friends who have the same interests or preferences, as well as by users who are well informed in a certain field, or who are known to be specialists, and the like. In other words, information issued by persons such as those who have the same interests or preferences, those whom the users place their confidence in, or those whom they appreciate tends to look reliable and appealing to the users. In the users' view, the information recommended by these people can thus be translated into filtered information of both established reliability and a high level of usefulness. The more useful these pieces of information having won the confidence are to the users, the higher the chances are for the information to be recommended and shared with other persons, acquaintances, and friends. That is, the information will reach a greater number of people.

Among network communities for connecting persons with the same interests or preferences for information exchange on the Internet is that of the social networking site (SNS) type. Network communities of this SNS type connect individual users on the Internet as friends or acquaintances, thereby networking each user's human relationships in a visible form on the Internet. The networks created allow various actions to be undertaken within the network, such as messaging, information exchange, and the introduction and recommendation of friends and acquaintances on the Internet. What pieces of information or news are gaining the attention of the network users (members) can be seen from diaries, Weblogs, and the like. That is, the realization of information exchange within a network that consists of friends, acquaintances, or persons having the same interests or preferences ensures information reliability and the like. This also provides information selection, organization, classification, and other information filtering functions which are usually done by people, thereby alleviating the burden of collecting information. One example of typical SNS network community sites is the social networking service "mixi" (registered trademark, http://mixi.jp/).

In view of information usefulness, there are some information evaluation and information referral systems that utilize word-of-mouth techniques. For example, information (being evaluation information) on certain products or information submitted by any number of users is distributed to provide useful information to users for improved information propagation.

Information filtering technologies have conventionally made use of collaborative filtering. In this collaborative filtering technique, users' preferences are extracted from the past action histories of the users on the Internet without the users intentionally creating a network or the like. The preferences of a particular user are then estimated and information corresponding to their preferences is provided based on the preference information of other users who have taken actions similar to those of that particular user. For example, Japanese Patent Application Laid-Open No. 2003-216636 describes a method for recommending the latest article which uses this collaborative filtering technique to extract a plurality of similar users from users' history information. The result is then analyzed in order to extract a subcategory candidate, and the latest articles are provided based on this subcategory candidate.

Recently, feed techniques have also been developed that are intended to facilitate monitoring for specific information on the WEB and acquiring update information. The term "feed(s)" refers to information in XML format based on RSS, RDF, Atom, or other standards accompanying the contents to be provided from WEB sites. For example, information sources such as the URLs of those WEB sites and attributes of the information to be provided (date and time, titles, categories, and the like of information or articles published by the WEB sites) are included. Feeds are typically acquired using feed readers such as an RSS reader. Feed readers have an autopilot function. Once a user registers for feeds to subscribe to, the autopilot function can automatically acquire the registered feeds and acquire update information on the sites to read (or acquire notification of an update). These feeds are not the actual contents but data in XML format for providing the locations of the contents (information sources) and the information attributes (date and time, title, category, and the like) to the users. The actual content is thus not limited to any information medium (being the type of information such as music information and video information or the like).

Nevertheless, even given the foregoing conventional technologies, adequate information filtering functions have not yet been made available to users. Firstly, SNS network communities essentially require that information senders who send information actively submit (register) the information to their diaries, blogs, and the like. Word-of-mouth-based information referral also requires that information providers who provide referral information take intentional actions such as sending an email or message.

Joining an SNS network community also requires such actions as recommendation or referral by a user who belongs to the network. That is, users are associated with each other depending on the degree of intimacy or reliability between each user and not on the type of information. The information to be exchanged within each SNS network community therefore has a high propensity to be confined to that community, and the information exchange is limited to certain pieces of information only and fails to provide a sufficiently wide network of users.

Moreover, in information recommendation systems using the conventional collaborative filtering described above, the function for acquiring the action history information of users on the Internet and the function for displaying the results of the information recommendation based on the action history information are dependent on specific users, plug-ins (programs and the like), and information media. Therefore, it is absolutely necessary for the users to visit the sites. In other words, since the users, the information media, and the sites to be browsed are limited, conventional collaborative filtering does not promise much increase in the number of users and the number of contents. It is therefore impossible to organize enormous amounts of information and provide fully screened information to users.

In addition to this, collaborative filtering will not provide uses with the results of an information recommendation in an easily accessible fashion, so that users must take the trouble to view the results of a recommendation on a WEB browser or client software. More specifically, users who are informed of an information recommendation by email or the like need to access user-specific pages or the like on the WEB in order to browse the pieces of information selected by collaborative filtering. In this instance, users need not browse each individual WEB site on their WEB browser and any burden placed on users is somewhat alleviated accordingly, but not by much. It is therefore necessary to distribute information so that redundant user actions undertaken on the information, such as accessing, are minimized in order to reduce any burdens placed on the users as much as possible.

As mentioned above, the feed technologies do not deal with actual contents but with data in XML format which carries the locations and attributes of the contents. The actual contents are therefore not limited to any information medium. Feed-based information management can therefore reduce user burdens when compared with the case where users visit and browse each individual WEB site that is registered as a bookmark on their browser, whereas an increased number of feeds can lead to more feeds that pertain to the pieces of information desired to be acquired, as registered by the users. This can eventually preclude the users from fully organizing the information, making it impossible to provide well-systemized screened information, i.e., perform information filtering that is useful to the users.

Second, the information that is filtered by the foregoing SNS network communities and the collaborative filtering technologies (in SNS network communities, the information that is submitted and referred by each user in the networks; with the collaborative filtering technologies, the information that is recommended based on the action histories of other users having similar preferences) is obtained based on user connections such as human relationships (intimacy, reliability, and the like) and preference similarities between the users. In other words, the information filtering functions provided by the SNS network communities and the collaborative filtering technologies always perform filtering based on the framework of human relationships between users.

That is, in an SNS network community, a plurality of users has an unchanged fixed relationship once they join the network. The relationships between users will not vary depending on the different respective variable interests and values of the users with respect to information. Since information is always distributed according to the framework of the fixed human relationships such as friends and acquaintances, the information will eventually drop in usefulness to the users over a period of time. Moreover, even with collaborative filtering, functions such as acquiring the action history information of the users are dependent on plug-ins (programs and the like) and information media. Unless the users themselves take actions corresponding to a change in their interests and values with respect to information, the relationships with other users who have similar preferences will not vary greatly. As a result, the information will drop in usefulness over a period of time.

To be more specific, the relationships of users with other users who do not provide (distribute) information that is beneficial or useful to the users are lower in reliability (significance) than the relationships with other users who provide useful information. Nevertheless, as mentioned above, the information filtering does not reflect the relationships between users (weightings corresponding to the variable relationships between users). Even the information that is less useful to the users can thus also be distributed based on the framework of the fixed human relationships such as friends and acquaintances, and as such, the usefulness of information to the users is impaired.

In particular, when information is distributed without reflecting any of the weightings corresponding to variable relationships between the users, the users must determine whether the information is beneficial or not each time. This consequently imposes an unnecessary burden on the users. As above, according to the conventional SNS network communities and collaborative filtering technologies which provide information filtering functions without reflecting different respective variable relationships between users, information filtering can only be favorably provided to users to a certain extent.

In another respect, conventional SNS network communities and collaborative filtering technologies do not allow users to modify the relationships between users arbitrarily. Conventionally, some functions have thus been provided to make a setting that will reject information from unknown or unfamiliar users and exclude them from the user's own network. This means disconnecting the relationships between the users, however, instead of modifying the relationships between the users. Information filtering thus has a greater impact, and it is often impossible to provide appropriate information to users. With such conventional information filtering functions, which are based on unchangeable fixed relationships between users with no feedback pertaining to different respective varying interests and values of the users with respect to information, it is impossible to secure sufficient usefulness of information.

On the current Internet where a great diversity of information is conveyed in large volumes, it is difficult for the users to estimate the usefulness of information in objective terms when selecting and choosing information. Users will then select and choose information subjectively based on their own interests and values. In this instance, the past action histories (information reliability, convenience, and the like) of the users themselves may often become dominant factors, with only a certain limited group of users who distribute useful information, or a limited group of information, being accessible.

### SUMMARY OF THE INVENTION

In view of the foregoing, it is an obj ect of the present invention to provide an information distribution system, an information distribution apparatus, and an information distribution method for providing information useful to users through suitable information filtering.

To achieve the object, according to one aspect of the present invention, provided is an information distribution system which collects a feed provided by a feed providing site and distributes the same to a user. The information distribution system has an aggregation feed control means which performs a redirection processing on the feed acquired and aggregates a plurality of the feeds subjected to the redirection processing to generate a aggregated feed, the redirection processing being intended to access the feed providing site through the information distribution system, a browsing history database which stores a browse request for each of the feeds in the aggregated feed from a user as a browsing history of the user feed by feed, and a recommendation feed control means which generates a recommended feed based on the browsing histories of a plurality of users having similar browsing histories on each feed.

According to another aspect of the present invention, provided is an information distribution system which collects a feed provided by a feed providing site and distributes the same to a user. The information distribution system has a feed distribution means which performs a redirection processing on a feed to be distributed to the user and distributes the feed, the redirection processing being intended to access the feed providing site through the information distribution system when the user browses the feed,a database which stores a browse request for the distributed feed from the user as a browsing history of the user feed by feed, a user network construction means which generates user significances between a first user and respective other users based on similarities between the browsing histories of the users on the feeds, and creates a user network in accordance with the user significances, a feed recommendation control means which calculates a recommendation contribution factor of the other users to the first user on the feeds based on the browsing histories of the respective other users in the user network and their user significances to the first user, and a recommendation feed control means which generates a recommended feed to be recommended to the first user using the recommendation contribution factor.

The features of the information distribution system and the information distribution method of the present invention will become more apparent from the following description of specific embodiments when read in conjunction with the drawings.

### BRIEF DESCRIPTION OF THE DRAWINGS

Fig. 1 is a schematic block diagram of an information distribution system according to embodiment 1 of the present invention;
Fig. 2 is a block diagram showing the configuration of an information distribution server according to embodiment 1 of the present invention;
Fig. 3A is a flowchart for explaining the processing of the information distribution system according to embodiment 1 of the present invention;
Fig. 3B is a flowchart for explaining the processing of the information distribution system according to embodiment 1 of the present invention, being continued from Fig. 3A;
Fig. 3C is a flowchart for explaining the processing of the information distribution system according to embodiment 1 of the present invention, being continued from Fig. 3B;
Fig. 4 is a flowchart for explaining browse request processing in the information distribution system according to embodiment 1 of the present invention;
Fig. 5 is a flowchart for explaining recommended feed generation processing in the information distribution system according to embodiment 1 of the present invention;
Fig. 6 is a flowchart for explaining aggregated feed generation processing in the information distribution system according to embodiment 1 of the present invention;
Fig. 7A is a diagram showing a feed distribution setting screen, a WEB page to be provided by the information distribution system according to embodiment 1 of the present invention;
Fig. 7B is a diagram showing a user registration screen, a WEB page to be provided by the information distribution system according to embodiment 1 of the present invention;
Fig. 8 is a diagram showing a feed reader running on a user terminal of the information distribution system according to embodiment 1 of the present invention;
Fig. 9 is a diagram for explaining the method of calculating a feed significance in the information distribution system according to embodiment 1 of the present invention;
Fig. 10 is a diagram showing a WEB page to be provided by the information distribution system according to embodiment 1 of the present invention;
Fig. 11 is a diagram showing a WEB page to be provided by the information distribution system according to embodiment 1 of the present invention;
Fig. 12 is a diagram showing a WEB page to be provided by the information distribution system according to embodiment 1 of the present invention;
Fig. 13 is a schematic block diagram of an information distribution system according to embodiment 2 of the present invention;
Fig. 14 is a block diagram showing the configuration of an information distribution server according to embodiment 2 of the present invention;
Fig. 15A is a flowchart for explaining the processing of the information distribution system according to embodiment 2 of the present invention;
Fig. 15B is a flowchart for explaining the processing of the information distribution system according to embodiment 2 of the present invention, being continued from Fig. 15A;
Fig. 15C is a flowchart for explaining the processing of the information distribution system according to embodiment 2 of the present invention, being continued from Fig. 15B;
Fig. 15D is a flowchart for explaining the processing of the information distribution system according to embodiment 2 of the present invention, being continued from Fig. 15C;
Fig. 16 is a flowchart for explaining aggregated feed generation processing in the information distribution system according to embodiment 2 of the present invention;
Fig. 17 is a flowchart for explaining browse request processing in the information distribution system according to embodiment 2 of the present invention;
Fig. 18A is a flowchart for explaining recommended feed generation processing in the information distribution system according to embodiment 2 of the present invention;
Fig. 18B is a flowchart for explaining recommended feed generation processing in the information distribution system according to embodiment 2 of the present invention;
Fig. 18C is a flowchart for explaining feedback processing in the information distribution system according to embodiment 2 of the present invention;
Fig. 19A is a diagram for explaining one example of calculating a recommendation contribution factor in the information distribution system according to embodiment 2 of the present invention;
Fig. 19B is a diagram for explaining one example of calculating a recommendation contribution factor in the information distribution system according to embodiment 2 of the present invention;
Fig. 19C is a diagram for explaining one example of changing a user significances depending on the feedback processing in the information distribution system according to embodiment 2 of the present invention;
Fig. 20A is a diagram showing a feed distribution setting screen, a WEB page to be provided by the information distribution system according to embodiment 2 of the present invention;
Fig. 20B is a diagram showing a user registration screen, a WEB page to be provided by the information distribution system according to embodiment 2 of the present invention;
Fig. 21 is a diagram showing a feed reader running on a user terminal of the information distribution system according to embodiment 2 of the present invention;
Fig. 22 is a diagram showing a WEB page to be provided by the information distribution system according to embodiment 2 of the present invention;
Fig. 23 is a diagram showing a WEB page to be provided by the information distribution system according to embodiment 2 of the present invention;
Fig. 24 is a diagram showing a WEB page to be provided by the information distribution system according to embodiment 2 of the present invention;
Fig. 25 is a diagram showing a WEB page to be provided by the information distribution system according to embodiment 2 of the present invention;

### DETAILED DESCRIPTION OF THE PREFERRED EMBODIMENTS

Hereinafter, embodiments of the present invention will be described.

### [Embodiment 1]

With reference to the accompanying drawings, an information distribution system, which the information distribution method of the present invention is applied, will now be described in conjunction with the following preferred embodiments.

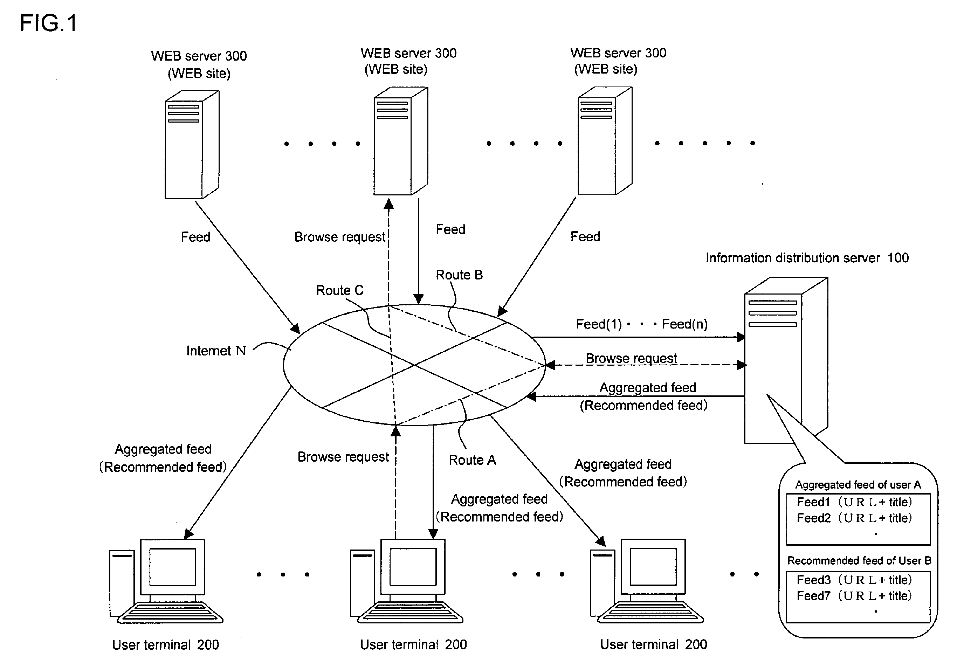

Fig. 1 is a schematic block diagram showing the information distribution system according to embodiment 1 of the present invention. The information distribution system of the present embodiment includes an information distribution server 100 which collects feeds provided from a plurality of WEB servers (WEB sites) 300 on the Internet and distributes the collected feeds to user terminals 200 of respective users. The user terminals 200 are computers having Internet-capable communication means, and may be portable terminals or cellular phones. A feed reader and a WEB browser are installed on each of these user terminals 200. The feed reader, such as an RSS reader, is intended to receive feeds that are distributed for feed browsing and subscription. The WEB browser is intended to browse WEB pages provided by the WEB servers 300. The WEB servers 300 are content providing servers for distributing contents such as information, articles, music, and videos and the like. In order to distribute these pieces of information to a wide range of users, they generate feeds for the respective pieces of content.

Feeds are typically browsed using a feed reader such as that mentioned above. The feed reader has a feed registration function, an autopilot feed collecting function, and a feed display function. Feeds to be browsed (using URL information on the WEB servers that provide the feeds) are registered in this feed reader so that the feed reader, when activated on the user terminals 200, automatically collects the latest feeds from the WEB servers 300 that provide the respective feeds that are registered. Then, information, article summaries, and/or article titles included in the feeds are displayed on a display section of the feed reader. As a result, users can browse the latest feeds on their user terminals 200, and select (e.g., click) articles (article titles) in these feeds with a mouse or other operating means in order to access the WEB servers (WEB sites) 300 that provide these feeds based on the URL information included in the feeds.

As mentioned previously, feeds are information in XML format based on RSS, RDF, Atom, or other standards accompanying the contents to be provided by the WEB sites. A feed contains URL information on a WEB site (information source information) and attributes of information or articles to be provided by the WEB site (the date and time of the information or articles, title information or summary information, and categories pertaining to the information or articles (tag information)). Suppose, for example, an economy-related feed is provided by a WEB site. This feed will then contain title information or summary information on the latest information or articles, tag information for associating this feed with economy-related information, such as "finance, stock market, yen rate, bank, interest" (being keyword information containing categories and types of feed information, and being classified while a plurality feeds are associated with single tag information), and URL information on the provider of this feed (information source). It should be appreciated that a feed is information in XML format in which a plurality of articles are associated with the feed header of the WEB site that provides this feed. For example, feed A includes a plurality of articles 1, 2, ..., N. Each article is configured as an article item composed of published date and time of the article, an article title or summary, URL information, and tag information in XML format. Browsing a feed therefore includes browsing a plurality of article items included in the feed, and processing the feed conceptually includes processing each individual article item.

The information distribution system according to the present embodiment utilizes such existing feed readers in order to reduce any burden on users and distribute useful information to the users. It also constructs user networks that are not limited to the user attributes of users who browse information, the information formats, or other factors, and thereby provides suitable information to a wide range of users.

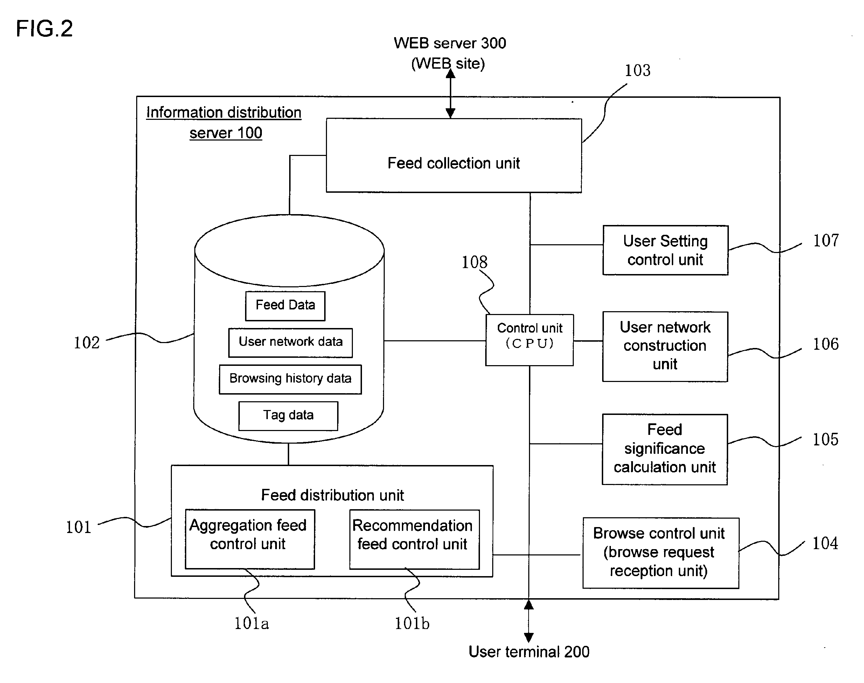

Fig. 2 is a block diagram showing the configuration of the information distribution server 100. The information distribution server 100 includes a feed distribution unit 101, an information distribution database (browsing history database) 102, a feed collection unit 103, a browse control unit 104, a feed significance calculation unit 105, a user network construction unit 106, and a user setting control unit 107. The feed distribution unit 101 controls the distribution of feeds to the user terminals 200. The information distribution database 102 stores feed distribution setting information registered by users through the user terminals 200, tag information included in feeds, feed browsing histories of the users, and user network information. The feed collection unit 103 collects the latest feeds from the respective WEB servers 300 in response to a feed collection request from the user terminals 200, based on each user's feed distribution setting information which is stored in the information distribution database 102. The browse control unit 104 receives a feed browse request from the user terminals 200 and stores the browsing histories of the users into the information distribution database 102. The feed significance calculation unit 105 calculates the feed significances of each feed, which provide criteria as to whether or not the information is useful to respective users. The user network construction unit 106 has a collaborative filtering function. It calculates similarities between user preferences from the browsing histories of the users on feeds and creates user network information which associates users of high similarities with each other. The user setting control unit 107 provides the user terminals 200 with a setting screen (WEB page) for setting (registering) which feeds the users want to have distributed and making various settings for feed acquisition. It also stores setting information entered via this WEB page in the information distribution database 102 as feed distribution setting information on each user. These units are controlled by a control unit (CPU) 108.

A description will now be given of the individual components of the information distribution server 100 and the processing of the information distribution system according to the present embodiment.

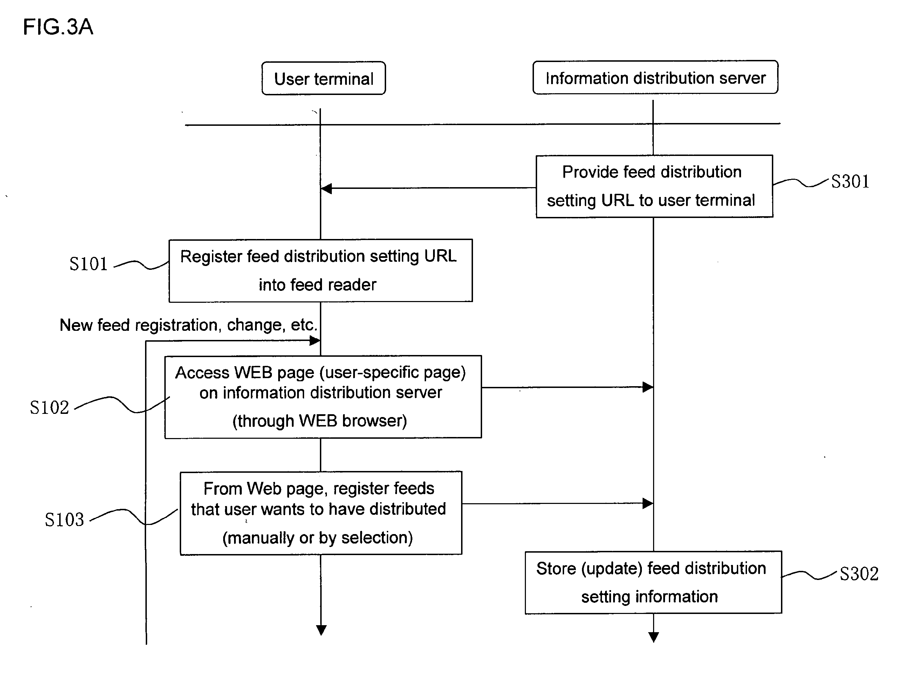

Initially, as shown in Fig. 3A, the information distribution server 100 of the present embodiment provides each user with a feed distribution setting URL, i.e. , a WEB page intended to provide feed distribution settings for receiving the distribution of desired feeds (step S301). The user registers this feed distribution setting URL into the feed reader on his/her user terminal 200 (step S101). The user can access the WEB page provided by the information distribution server 100 through a WEB browser (or a feed reader having WEB browsing functions) based on the feed distribution setting URL (step S102).

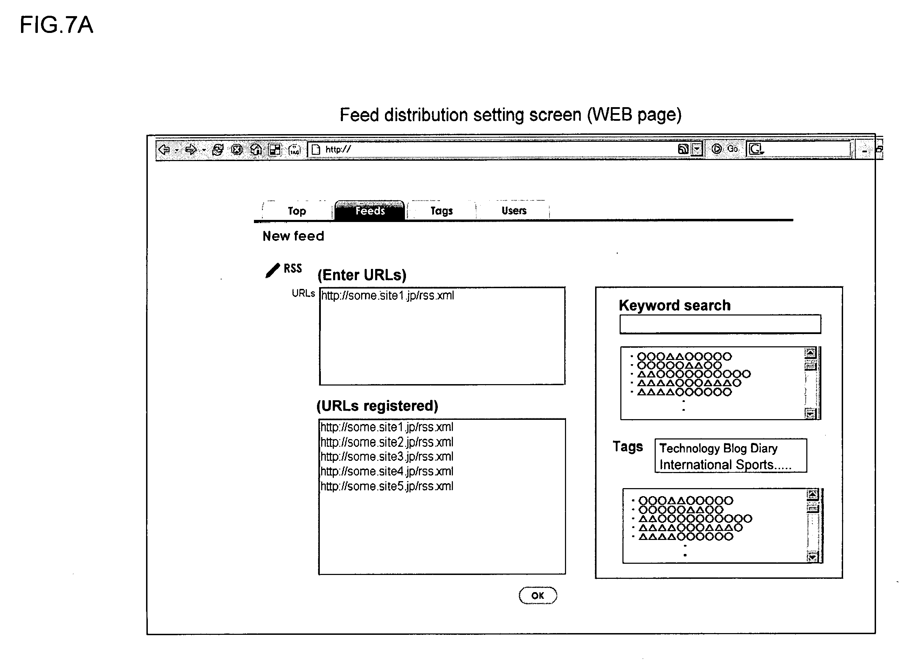

Fig. 7A shows an example of the WEB page (user-specific WEB page) to be provided through the WEB browser of the user terminal 200. The user sets the feeds that he/she wants to have distributed into the information distribution server 100 by selecting and setting the desired feeds to be distributed from among a feed list or the like that contains search hits on feeds (keyword search or tag search) (step 103). The user may directly enter the URLs of WEB servers (WEB sites) that provide the feeds if the URLs are known in advance. The user setting control unit 107 provides this feed distribution setting URL or WEB page. This user setting control unit 107 stores the information selected or entered through the WEB page in the information distribution database 102 as feed distribution setting information on each user (step S302).

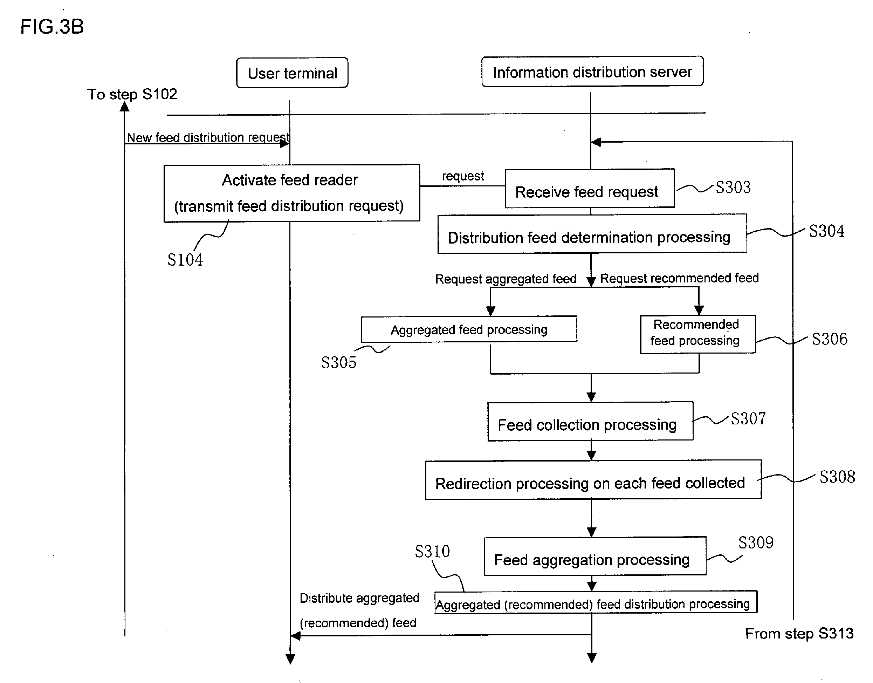

The feed distribution unit 101 includes an aggregation feed control unit 101a and a recommendation feed control unit 101b. This feed distribution unit 101 receives an aggregated feed request originated by a user operation from the user terminal 200, or an aggregated feed request automatically transmitted from the user terminal 200 when the feed reader is activated (see steps S104 and S303 in Fig. 3B) . It then determines the type of feed to be distributed, as requested by the user (step S304). This determination processing at step S304 is performed based on the type of the feed request transmitted from the user terminal 200 (such as a flag or other identification information for indicating whether an aggregated feed is requested or whether a recommended feed is requested). When the feed distribution unit 101 determines at step S304 that an aggregated feed is requested by the user, the feed distribution unit 101 outputs an instruction for requesting aggregated feed processing to the aggregation feed control unit 101a. The aggregation feed control unit 101a and the feed collection unit 103 thus begin aggregated feed generation processing.

In response to a processing request from the feed distribution unit 101, the aggregation feed control unit 101a acquires the feed distribution setting information on the feed-requesting user from the information distribution database 102 and requests the feed collection unit 103 to collect feeds based on the URLs of the respective feeds included in this feed distribution setting information (step S305). Based on the feed URLs, the feed collection unit 103 performs connection processing with the WEB servers 300 that provide the feeds, and acquires the latest feeds provided by the WEB servers 300 (step S307). Then, the aggregation feed control unit 101a performs redirection processing on each feed (the URLs of a respective plurality of article items included in the feed) collected by the feed collection unit 103 (step S308). Specifically, assuming that the information server 100 of the present embodiment has URL1 of "www.oooo.co.jp", the URL1 of the information distribution server 100 will be added to URL2 of a feed collected. For example, if feed A has URL2 of "www.ΔΔΔΔ.co.jp", then the URL3 of the feed after the redirection processing is "www.oooo.co.jp/www.ΔΔΔΔ.co.jp". In the redirection processing of the present embodiment, parameters such as an ID of the feed to be distributed are also added to the URL3 in order to allow for the acquisition of user browsing histories. For example, feed IDs are previously assigned to the respective feeds in the feed distribution setting information stored in the information distribution database 102. Then, a corresponding feed ID is added to create URL4 = "www.oooo.co.jp/feed ID/www.ΔΔΔΔ.co.jp". It should be appreciated that the IDs of the users for the feeds to be distributed to and the IDs of article items may also be used as parameters in addition to feed IDs. A detailed description of this will be given later.

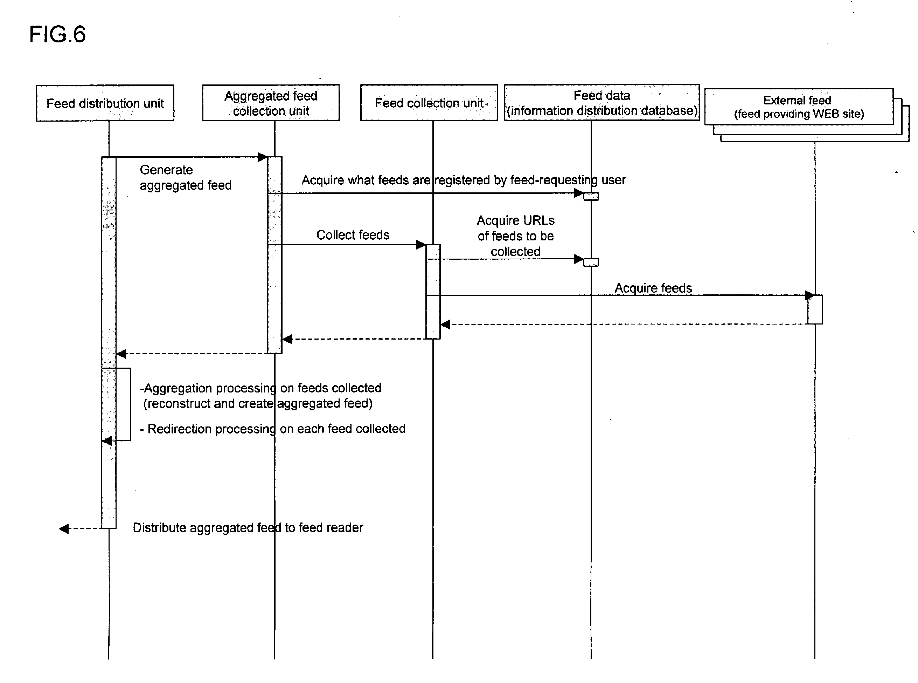

Subsequently, the aggregation feed control unit 101a synthesizes and aggregates the redirected feeds, thereby generating one single aggregated feed in XML format (step S309). Specifically, the feeds in XML format provided from the respective WEB sites are each composed of the feed header of the web site + article 1 + article 2 + .... The aggregation feed control unit 101a of the present embodiment thus removes the feed headers of the respective feeds collected, thereby extracting only the articles of the feeds. That is, each article extracted constitutes one single article item which includes the published date and time of the article, the title or summary of the article, URL information, and tag information. An aggregated feed is thus generated by removing the feed headers from the respective feeds to extract article items, aggregating these article items extracted into one feed, and adding an aggregated feed header corresponding to each user. The aggregated feed thus generated is distributed to the user terminal 200 by the feed distribution unit 101 (step S310). In the information distribution system according to the present embodiment, the feed readers on the user terminals 200 do not acquire feeds from the respective feed providing WEB sites independently as heretofore. Instead, the information distribution server 100 collects a plurality of feeds at a time based on the feed distribution setting information set therein, and aggregates the plurality of feeds collected and provides the same to the user terminals 200 (see Figs. 1 and 6).

Now, if the feed distribution unit 101 determines at step S304 of Fig. 3B that a recommended feed is requested by the user, the feed distribution unit 101 outputs an instruction for requesting recommended feed processing to the recommendation feed control unit 101b. The recommendation feed control unit 101b, the feed collection unit 103, and the feed significance calculation unit 105 thus begin recommended feed generation processing.

In response to the processing request from the feed distribution unit 101, the recommendation feed control unit 101b extracts recommended feeds that are to be recommended to the user based on the browsing history of the user, the user network information, feed significances, and the feed distribution setting information of the user which will be described later. The recommendation feed control unit 101b then performs the processing of steps S307 to S309 of Fig. 3B based on the recommended feeds extracted, and distributes the recommended feed generated by the feed distribution unit 101 to the user terminal 200 (step S310).

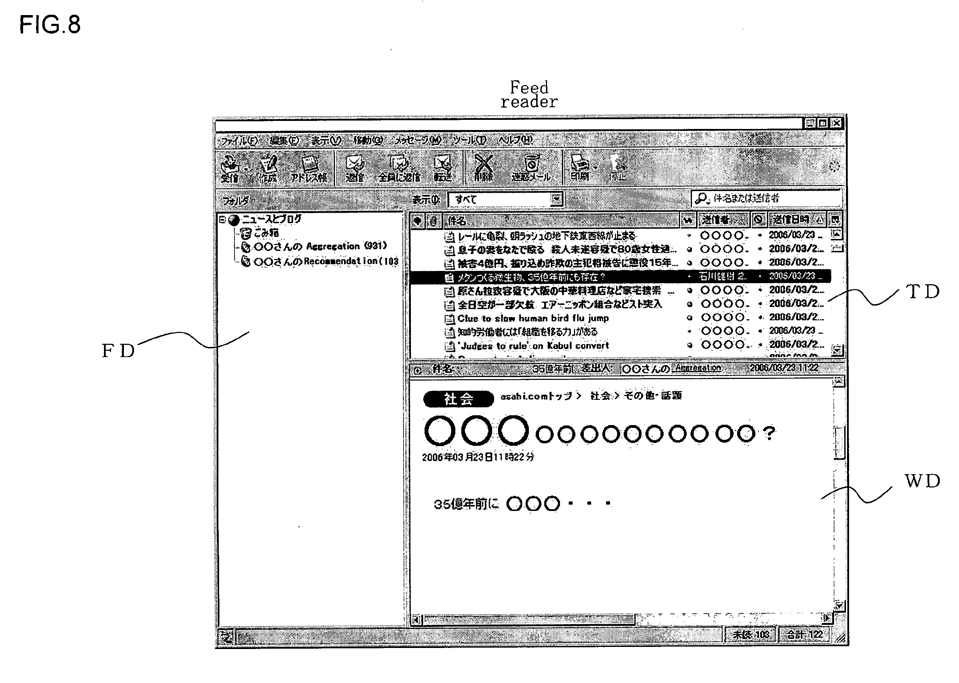

Fig. 8 is a diagram showing an example of the feed reader on the user terminal 200 where the foregoing feed distribution setting URL is registered in the feed reader. An aggregated feed and a recommended feed each appear in a feed list display section FD of the feed reader. At step S104 of Fig. 3B the aggregated feed or the recommended feed displayed on this feed list is selected in order to transmit a feed request to the information distribution server 100. The information distribution server 100 then performs the processing of steps S303 to S310 in order to distribute the aggregated feed or the recommended feed to the user terminal 200.

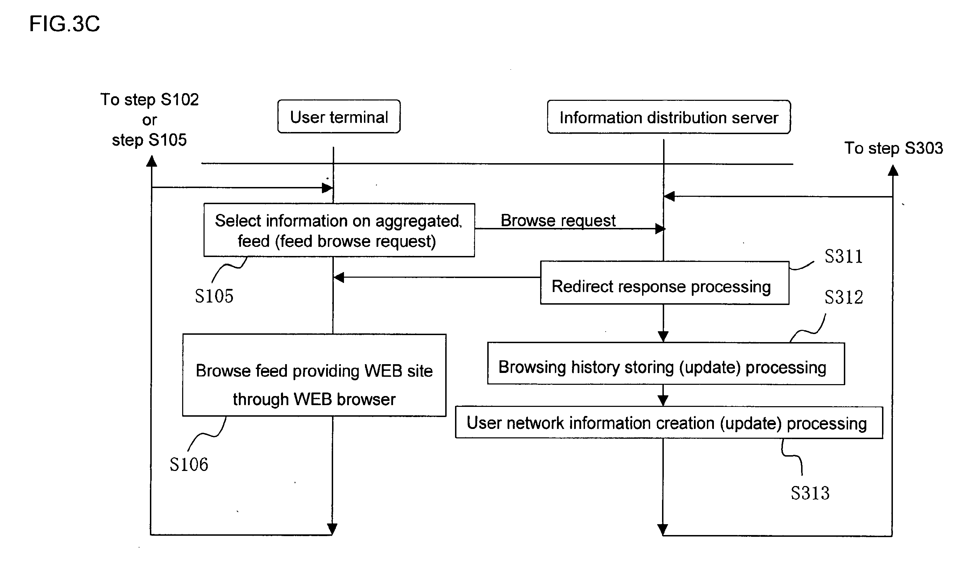

The feed reader of Fig. 8 also has a title list display section TD and a WEB browser section WD. The title list display section TD shows a plurality of pieces of information and title information on articles (article items) included in the aggregated feed or the recommended feed. When the user selects a piece of title information in the title list display section TD with a mouse or other selecting means, a feed request signal for the article item selected is transmitted to the information distribution server 100 (see step 5105 in Fig. 3C), and a WEB page from the WEB server 300 that distributes the feed selected appears on the WEB browser section WD.

The browse control unit (browse request reception unit) 104 of the information distribution server 100 performs browse request processing when it receives a browse request (feed browse request) for each article item in the aggregated feed or recommended feed displayed on this feed reader. Specifically, it performs redirect response processing when receiving the browse request for a feed (step S311) and stores the browsing history on the article item browsed by the user (feed browsing history) into the information distribution database 102 as the user's browsing history (step S312). The browse control unit 104 also instructs the user network construction unit 106 to perform the processing in order to construct a user network (creating and updating user network information) based on the feed browse request (browsing history) of this user (step S313).

In the information distribution system according to the present embodiment, as shown in Fig. 1, the processing for acquiring the user's browsing history entails redirection processing for each article item of the aggregated feed. A browse request for each article item of the aggregated feed from the user terminal 200 is thus not transmitted directly to the WEB site 300 to which the browse-requested article item pertains (route C), but to the information distribution server 100 of the present embodiment (route A). The information distribution server 100 then performs the redirect response processing so that the WEB page that provides the feed (route B) appears on the WEB browser of the user terminal 200. The browse control unit 104 performs browsing history storing processing on the feed, and the user network construction unit 106 creates (updates) user network information.

Consequently, according to the present embodiment, the WEB server 300 is accessed through these connection routes A and B while the user browses the WEB site as if connected directly to the corresponding WEB server 300 based on the feed browse request selected. That is, according to the information distribution system of the present embodiment, the feed browsing histories of the users can be acquired without any particular operation or application, and are instead based on daily feed selections, WEB site accesses, and the like that are made when the users browse information.

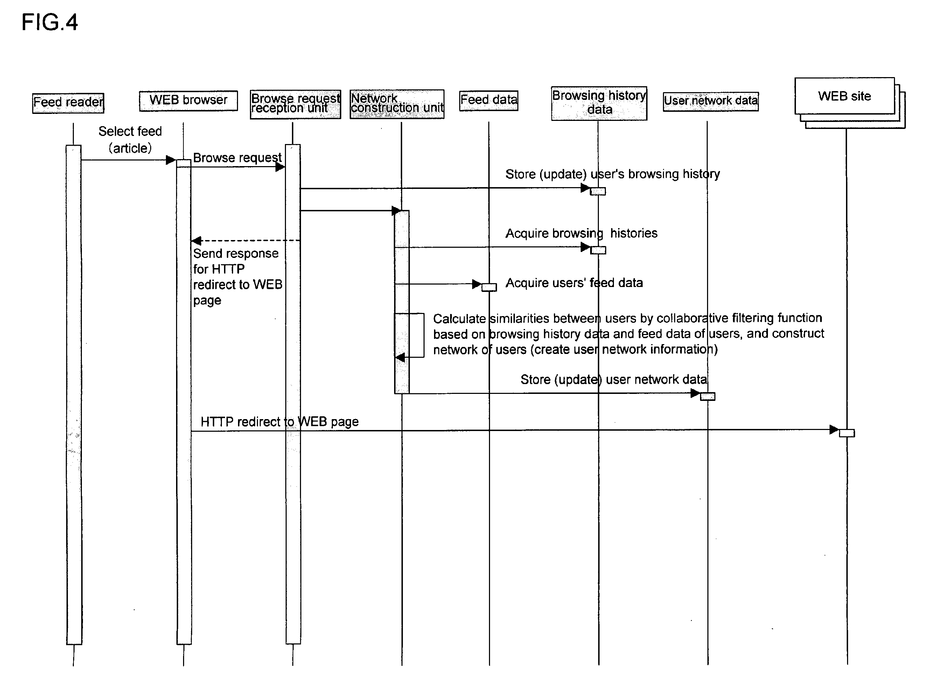

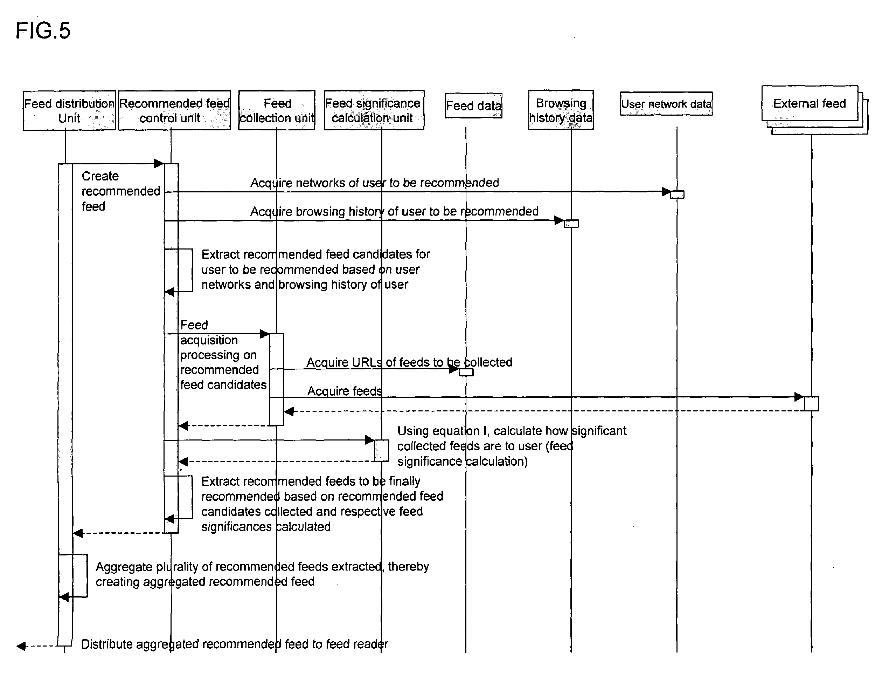

The browse request processing and the recommended feed generation processing of the information distribution system according to the present embodiment mentioned above will now be described in detail with reference to Figs. 4 and 5.

### <Browse request processing>

As shown in Fig. 4, the browse request processing of the information distribution system according to the present embodiment consists of two parts. One part includes the redirect response processing and the processing for storing the user's browsing history, which are performed by the browse control unit 104 after a feed browse request from a user terminal 200 is received. The other is the processing for creating and updating the user network information, which is performed by the user network construction unit 106. As mentioned previously, the aggregated feed and the recommended feed to be distributed to the user terminal 200 (each article item included in the aggregated feed and the recommended feed) are subjected to redirection processing. Thus, when the user selects a feed displayed on the feed reader of the user terminal 200, the WEB server 300 that provides the feed (contents) is not accessed directly, but instead is accessed indirectly once through the information distribution server 100 of the present embodiment. This makes it possible to acquire the browsing history of the user based on feeds, including which feeds have been selected by the user. As described above, the URLs of the feeds (article items) to be distributed to the user are accompanied by browsing parameters such as the IDs of the feeds, the ID of the feed-distributed user, and the IDs of the respective article items. The browse control unit 104 then acquires the browsing parameters included in URL when an access request is made from the user terminal 200 based on the feed browse request from the user, i.e., the URL subjected to the redirection processing. The browse control unit 104 stores the user's browsing history into the information distribution database 102 based on these browsing parameters.

The browsing histories stored in the information distribution database 102 include: browsing histories on feeds indicating when (date and time) and how many times which user has browsed what feed; browsing histories indicating when (date and time) which user has browsed information or articles pertaining to which feed; and browsing histories indicating when and how many times which user has browsed feeds with what tag information. For example, the information distribution database contains data such as user A has browsed feed A twice and at what time; user A and user B have browsed feed A twice and three times, respectively, and at what time; and user A and user B have browsed a feed having tag information of X four times and six times, respectively, and at what time.

Hereinafter, the browse request processing of the present embodiment will be described in detail with reference to Fig. 4. As shown in Fig. 4, a user initially selects a desired article item to browse from those displayed on the title list display section TD of the feed reader of his/her user terminal 200, using a mouse or the like. The WEB browser section WD of the feed reader has an internet access function, which is used to access the information distribution server 100 of the present embodiment in accordance with the URL included in the article item, subjected to the redirection processing. The browse control unit 104 receives the access from this user terminal 200 as a user's browse request for a feed. Receiving the user's feed browse request, the browse control unit 104 sends a response to the WEB browsing section WD of the user terminal so as to make an HTTP redirect notification to the WEB server (WEB page) that provides the user-requested feed (redirect response processing). It also stores this feed browse request into the information distribution database 102 as the browsing history data on the user.

After the processing for storing the user's browsing history is completed, the browse control unit 104 outputs a creation request instruction to the user network construction unit 106 so as to create (update) user network information. On receiving the request for the creation (update) processing from the browse control unit 104, the user network construction unit 106 acquires the browsing history data and the feed distribution setting information on all the users, which are registered in the information distribution database 102.

Using the collaborative filtering function, the user network construction unit 106 then calculates similarities between a plurality of users based on the browsing histories and the feed distribution setting information acquired. More specifically, it calculates the preferences of the users based on their browsing histories, and further calculates the similarities between these user preferences. The user network construction unit 106 then creates user network information which associates users having predetermined similarities with each other, and stores this user network information into the information distribution database 102. In the present embodiment, it is possible to extract users sharing a high number of similarities, and based on the browsing histories of these users, store feeds that are browsed frequently and tag information selected frequently by the users in the user network in the form of an additional table. Nevertheless, all the similarities between a certain user A and all the other users (the similarity of user B to user A, the similarity of user C, the similarity of user D, ..., and vice versa) may, for example, be instead stored as user relational information. Then, when user network information is in use, users may be extracted based on those similarities, and the browsing histories of the extracted users may be acquired from the information distribution database 102 in order to create the user network information as needed without any additional table or the like being required. Consequently, the user network information according to the present embodiment has only to contain, as a minimum, the preference similarities between all the users. It should be appreciated that this network construction unit 106 constructs the user network (creates and updates the user network information) each time a browsing history is added or updated, i.e. , a feed browse request from a user is received. The latest user networks are thus constructed in real time.

As above, the user network construction unit 106 of the present embodiment constructs a user network by associating a plurality of users having similar preferences through collaborative filtering based on the browsing histories of the respective users on each feed. The preferences of the users are calculated from three common factors including the users' browsing histories. A first factor is what feed the users have registered a distribution request for (feed distribution setting information). A second factor is which feed the users have browsed. A third factor is which tag information the browsed feed pertains to. These common factors of user preferences are taken into account when calculating the preferences of the respective users.

For example, when user X has registered for feed A in the feed distribution setting information and makes a browse request for this feed A, the user's preference for this feed A shall be high. The user preferences for all the feeds can thus be calculated in order to determine similarities between the users. That is, all users who have preferences within predetermined values for feed A are extracted, and the similarities of one user with the other plurality of users are calculated in the range of 0 to 1 depending on their preferences. Similarly, pieces of tag information to which the browsed feeds pertain are extracted from the browsing histories of the users before the user preferences for each piece of tag information are calculated in order to determine the similarities between the users who are associated with each other depending on the preferences on tag information. The user network information created by the user network construction unit 106 thus establishes an association between a plurality of users that share a high number of similarities. It also includes the browsing histories of this plurality of users, i.e., the feeds browsed by the users in the user network and the tag information on the feeds browsed. In other words, the user network information carries the feeds and tag information of interest to the entire user network.

The user networks of the present embodiment may include networks of users intentionally constructed by the users, in addition to the user networks that are automatically constructed without the conscious intention of the users based on similarities between the users through the acquisition of their browsing histories and the use of the collaborative filtering function, as described above.

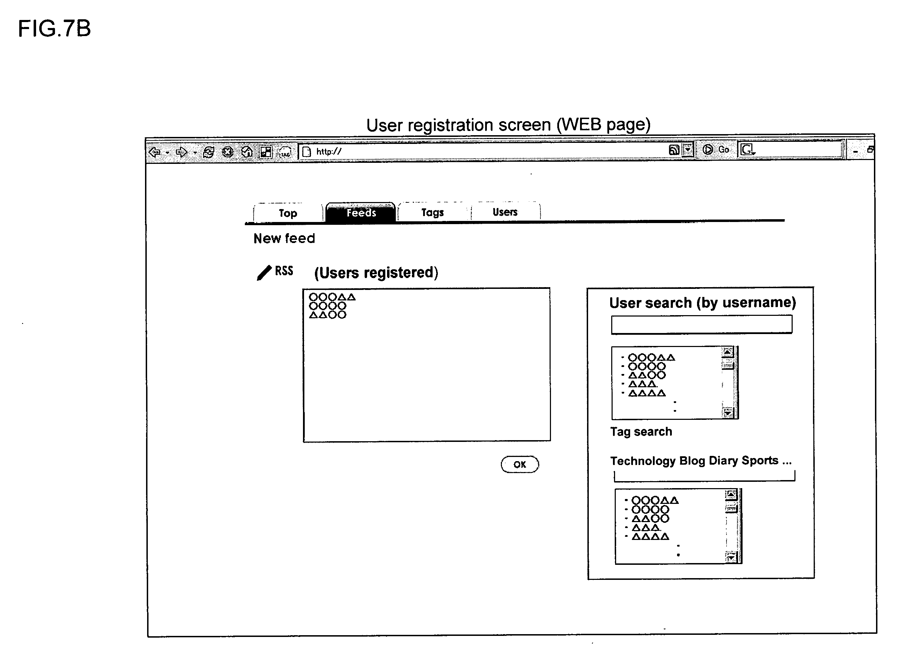

For example, a user can construct an intended user network by intentionally registering other users in whom the user is interested, such as friends who are known to have the same tastes or interests, as well as well known specialists and persons skilled in certain fields, into the information distribution server 100 from a setting screen provided by the user setting control unit 107 of the present embodiment. For example, like the WEB page intended for feed distribution setting, the user setting control unit 107 provides a user registration screen, as shown in Fig. 7B, and stores intended users who are registered from this user registration screen into the information distribution database 102.

As described above, the information distribution system according to the present embodiment provides user networks including both intended user networks which are intentionally constructed by users and automatic user networks which are constructed based on the daily action histories of users on the Internet without the conscious intention of users. The resulting user networks are utilized for the recommended feed generation processing by the recommendation feed control unit 101b and the like, which will be described later.

### <Recommended feed generation processing>

The recommended feed generation processing of the information distribution system according to the present embodiment is intended to recommend feeds (article items) which are useful to a user and provide them to the user based on the automatic user network which is constructed by the foregoing browse request processing, the intended user network which is intentionally constructed by the user, and the browsing history of the user.

Hereinafter, the recommended feed generation processing of the present embodiment will be described in detail with reference to Fig. 5. In response to a processing request from the feed distribution unit 101, the recommendation feed control unit 101b acquires user network information on the user to be recommended, and this user network information is constructed by the foregoing browse request processing of the present embodiment, and the browsing history of this user from the information distribution database 12. It then extracts recommended feed candidates based on the user network information and the browsing history of the user acquired.

Specifically, the recommendation feed control unit 101b extracts all the tag information that the users in the user networks have ever browsed that is included in the user network information created by the user network construction unit 106. Suppose, for example, that the user network information on user A includes user X (with a similarity of 0.5), user Y (with a similarity of 0.3), and user Z (a user in the intended user network, intentionally registered by user A), and that the tag information included in the browsing history of user A includes "computer" and "gourmet." Suppose also that the tag information of interest to the entire user network, i.e., the tag information that the four users, or user A, user X, user Y, and user Z, have ever browsed includes "computer," "gourmet," and "car." Then, user A has not browsed the tag "car" (a plurality of feeds pertaining to the tag "car").

Then, the recommendation feed control unit 101b extracts feeds that pertain to tag information of interest to the user networks of the user to be recommended, and are not included in the feed distribution setting information or the browsing history of the user, as recommended feed candidates. Moreover, in the present embodiment, if any feed that pertains to tag information of interest to the user networks of the user to be recommended and is not included in the feed distribution setting information or the browsing history of the user is distributed to an arbitrary user outside the user networks, then that feed is also automatically extracted as a recommended feed candidate.

As above, since the present embodiment uses tag information to extract recommended feeds for the user to be recommended, it is possible to increase the range of feeds that can be recommendation candidates. For example, suppose that feeds pertaining to tag information "computer," which is of interest to user A and to the user networks of this user A, include any feed on "computer" (or any article item in the feed) that has not been browsed by user A and is of interest to other users outside the user networks. In such cases, the possibility for user A to want to browse or subscribe to this feed is high, and the information can be highly useful to user A. Feed information or articles without such common factors in the tag information, on the other hand, have low possibilities of being read by user A in the first place.

Then, the recommendation feed control unit 101b outputs a feed collection request to the feed collection unit 103 in order to acquire the latest versions of the recommended feed candidates extracted. The recommendation feed control unit 101b also outputs a feed significance calculation request to the feed significance calculation unit 105 in order to calculate the significances that the recommended feed candidates extracted have with respect to the user to be recommended.

The feed collection unit 103, as mentioned above, acquires the URLs of the feeds to be collected from the information distribution database 102, and acquires the feed from the WEB servers 300 that provide the feeds.

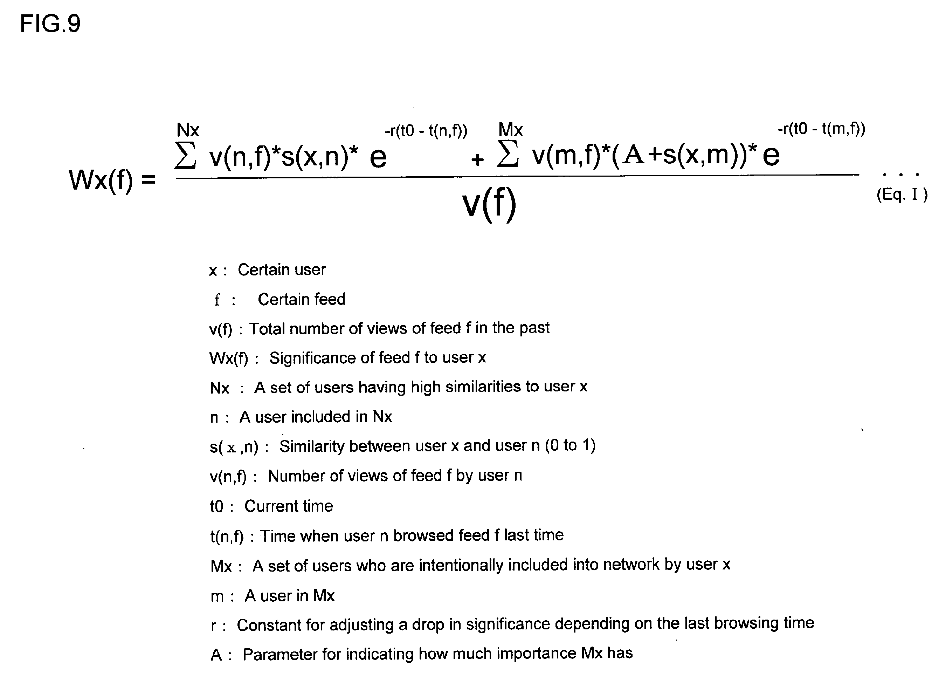

In the meantime, the feed significance calculation unit 105 calculates the feed significances that indicate how useful the recommended feed candidates are to the user to be recommended and how strongly their subscription is wanted. These feed significances are calculated for the respective feeds that are extracted as recommendation candidates based on the browsing histories of the recommended feed candidates by each user within the user networks. Specifically, the significance of each recommended feed candidate to user A is calculated in consideration of the following three factors. The first factor is the browsing rates of the respective users in the user networks to the entire browsing history of that feed in the past. The second factor is the browsing histories of users who have a greater number of similarities to user A (user X rather than user Y) from among the browsing histories of that recommendation feed candidate within the user networks. The third factor is whether or not the recommended feed candidate has been browsed by user A himself/herself and by user Z in the intended user network of the user A. The information usefulness deteriorates as the period of time has elapsed since each user reads the recommended feed candidate the last time. Thus, the significance is preferably calculated by taking account of how many users within the user networks have subscribed to it and if it has been recently subscribed to. This feed significance is calculated by the equation I shown in Fig. 9. In this instance, the indexes of significance of each feed to a user are as follows: the number of views of a recommended feed candidate (v(n,f)); the number of views by a user having a greater similarity to the foregoing number of views (similarity (s(x, n))) ; and whether the feed has been browsed at a recent date and time (t(n,f)). As mentioned previously, the information significance deteriorates as the period of time has elapsed since the recommended feed candidate was read the last time. Then, a determination as to whether or not it has been browsed at recent date and time is made by Exp(t0 - t(n,f)), where t0 is the present time and t(n,f) is the time the recommended feed was browsed by the user the last time. The parameter A in the equation I of Fig. 9 is an index for indicating how much significance the user network intentionally constructed by the user has. This parameter A can be increased in order to raise the significance of the recommended feed candidate when it is browsed by the users of the intended user network. Since most user networks are intentionally constructed by the users, this parameter A is preferably set to be greater than or equal to 1. It should be appreciated that the equation I of Fig. 9 has a denominator v(f) which is the total sum of the numbers of views of the feed in the past. The reason for the use of this is only that the significances of the respective feeds (respective article items) to the user are calculated in terms of ratios, and it may therefore be arbitrarily determined whether or not to use v (f) as the denominator of the equation I.

Next, the recommendation feed control unit 101b selects article items to be finally recommended to the user based on the feed significances of the respective recommended feed candidates which are calculated by the feed significance calculation unit 105. Feeds having high feed significances may simply be distributed to the user, but the present embodiment makes a further feed selection by using the number of views of each article item in the recommended feed candidates. More specifically, the numbers of views of the respective article items in the recommended feed candidates during a certain period (for example, the number of views of the respective article items within a week) are acquired from the information distribution database 102. The acquired number of views of the article items are then multiplied by the feed significances of the respective recommended feed candidates to which the article items pertain, and article items that reach or exceed a predetermined value are extracted as the article items (feeds) to be finally recommended to the user.

Like the aggregation feed control unit 101a described above, the recommendation feed control unit 101b then performs feed aggregation processing in order to aggregate the article items extracted and then distributes the recommended feed aggregated (aggregated recommended feed) to the user terminal 200.

Through such recommended feed generation processing of the present embodiment, highly useful feeds that have a high possibility of being interesting to the user himself/herself and the user networks of the user can be distributed to the user. In particular, the recommended feed generation processing of the present embodiment includes calculating the feed significances of a plurality of recommended feed candidates to the user. The numbers of views of the respective article items included in the recommended feed candidates are also referred to when extracting article items from the recommended feed candidates in order to generate recommended feeds. Consequently, even when some recommended feed candidates have low feed significances, article items included in the recommended feed candidates can be greater in significance to the user and can be distributed to the user as recommended feeds if the numbers of views of the article items are high. That is, recommended feed candidates browsed by other users outside the user networks tend to have low feed significances with respect to the user since the number of views within the user network is small. However, individual article items included in the recommendation candidates can be distributed to the user as recommended feeds if they are browsed many times. As above, according to the present embodiment, recommended feeds are generated based on the significances of the respective recommended feed candidates to the user and the numbers of views of the respective article items included in the recommended feed candidates. This makes it possible to generate recommended feeds that are highly useful to the user with a high degree of accuracy based on wide areas of information. Then, if the user browses a recommended feed, the browsing history is fed back through the foregoing browse request processing, with an impact on the significances of that feed to the other users in the user networks. This consequently provides the same effect as that of "transferring referred information to other persons."

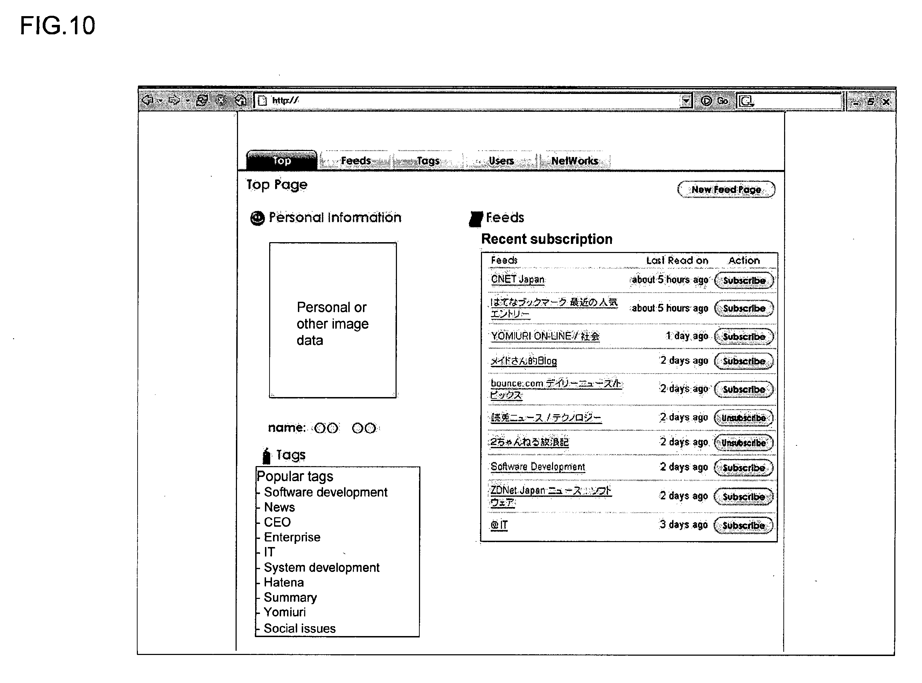

Figs. 10, 11, and 12 show examples of WEB pages that the information distribution system of the present embodiment provides to the user terminals 200.

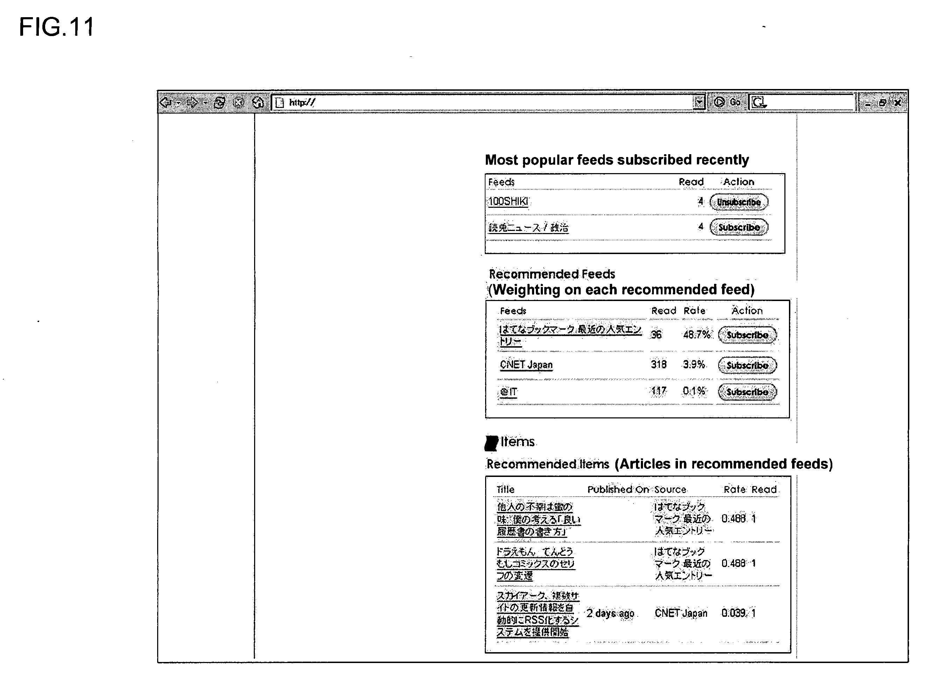

The information distribution server 100 of the present embodiment posts various types of information generated by the foregoing browse request processing and recommended feed generation processing on a WEB page such as those shown in Figs. 10 and 11, thereby providing the same information to each user who has made feed distribution settings. This WEB page shows profile information on that user, feeds that the user has subscribed to recently, tag information that is the most popular among all the users, the most popular feeds that have been subscribed to recently, weightings (feed significances) that the feeds recommended by the recommended feed generation processing have with respect to the user, and articles in the recommended feeds. On this WEB page, the user can make distribution settings on newly-recommended feeds, and refer to their own browsing history.

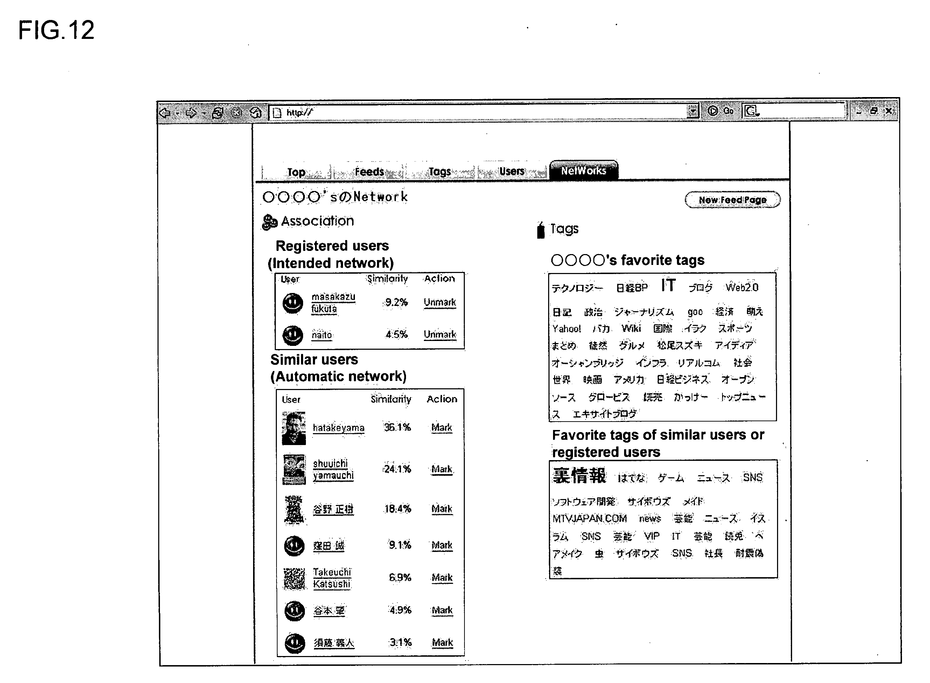

Fig. 12 shows a WEB page which shows the user network information on that user. On this WEB page, it is possible to refer to the information and similarity of each user in the user network that is automatically created by the foregoing browse request processing, information on each user in the intended user network that is arbitrarily set by the user, tag information of interest to the user himself/herself (tag information based on the browsing history of that user), and tag information of interest to the automatic or intended user network. As shown in Fig. 12, users in the automatically constructed user network can be marked up so that the marked users are registered into the intended user network.

As above, the information distribution system of the present embodiment aggregates a plurality of feeds set by a user into one feed, and distributes it to the user terminal. Users therefore need not acquire the feeds from the respective WEB servers independently, but can acquire the plurality of feeds collectively by simply setting the feed distribution URL provided by this information distribution server into their own feed reader. Each feed to be distributed is subjected to redirection processing. This makes it possible to acquire the daily browsing histories of the users on the Internet without any special mechanism, user operation, or the like.

In particular, the information distribution system of the present embodiment can acquire the browsing histories on feeds and thereby construct networks of users having similar preferences without the conscious intention of the users. Since a plurality of users associated with feeds they have browsed are organized into user networks, it is possible to provide information filtering that is useful to each individual user and distribute and recommend highly useful information without being limited by user attributes or network attributes, nor imposing on the users the burden of making them select their own settings with regard to feed distribution and the like.

Moreover, the information distribution system of the present invention provides a user with two user networks, i.e., an automatic user network which consists of users having similar preferences on the basis of the browsing histories on feeds and an intended user network which is constructed by the user's intentional registration. Consequently, the user can be provided with feeds from the intended user network, or network intentionally constructed by the user, and feeds from the automatic user network, where the users have preferences with a greater number of similarities. This makes it possible to provide the user with information filtering such as selection, organization, and classification of information that is matched to his/her preferences.

Furthermore, the information distribution system of the present embodiment provides recommended feeds using the tag information on feeds or article items in the feeds. The tag information is keyword-like information for indicating feed categories and the like. As described above, one single piece of tag information is associated with a plurality of feeds. That is, pieces of tag information of interest to a user network are extracted, and then feeds yet to be browsed by the users of this user network (feeds with no browsing history) are provided as recommended feeds from among a plurality of feeds pertaining to these pieces of tag information.

Suppose that a group of information that a certain user is interested in lies in a concentric configuration with the user at the center. The feed distribution setting information set by the user shall be at the center of these concentric circles. Then, a group of information the users of the intended user network and the automatic user network are interested in lies around, and a group of information the user and the users of the user networks are not much interested in lies outside of these circles. With such groups of information, the information distribution system of the present embodiment establishes an association between the user and the feeds using the tag information. This allows the provision of useful feeds to the user from among the feeds that the users in the user networks have not browsed at all, i.e., from a group of information that the user hardly ever has contact with. Consequently, it is possible to secure information usefulness and provide the user with information filtering over a wide range of information, thereby allowing for useful information distribution to the user.

### [Embodiment 2]

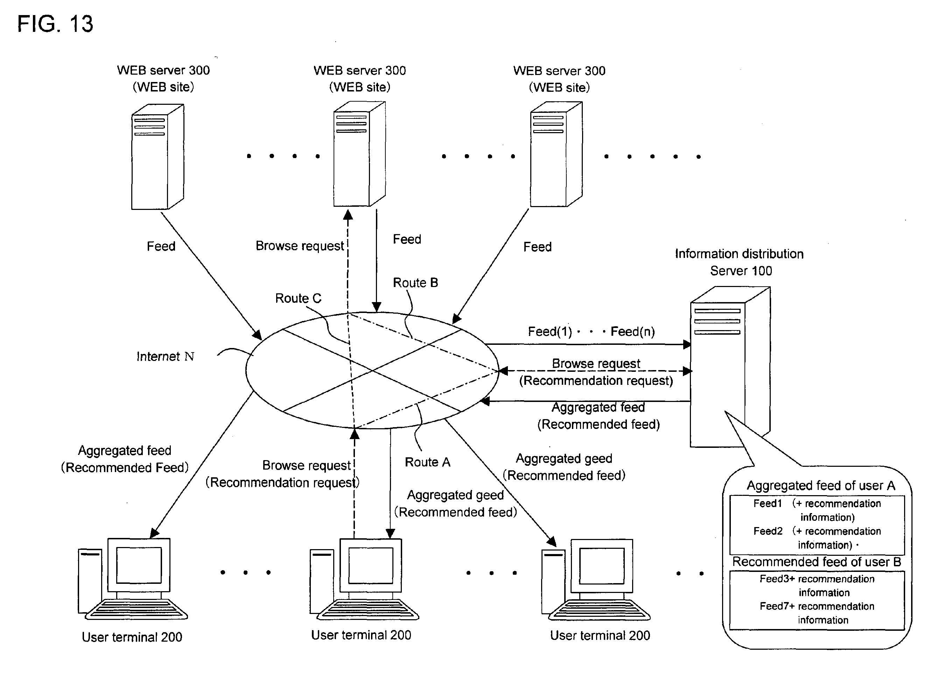

Fig. 13 is a schematic block diagram showing the information distribution system according to embodiment 2 of the present invention. The information distribution system of the present embodiment includes an information distribution server 100 which collects feeds provided from a plurality of WEB servers (WEB sites) 300 on the Internet and distributes the collected feeds to user terminals 200 of respective users. The user terminals 200 are computers having Internet-capable communication means, and may be portable terminals or cellular phones. A feed reader and a WEB browser are installed on each of these user terminals 200. The feed reader, such as an RSS reader, is intended to receive feeds that are distributed for feed browsing and subscription. The WEB browser is intended to browse WEB pages provided by the WEB servers 300. The WEB servers 300 are content providing servers for distributing contents such as information, articles, music, and videos and the like. In order to distribute these pieces of information to a wide range of users, they generate feeds for the respective pieces of content.

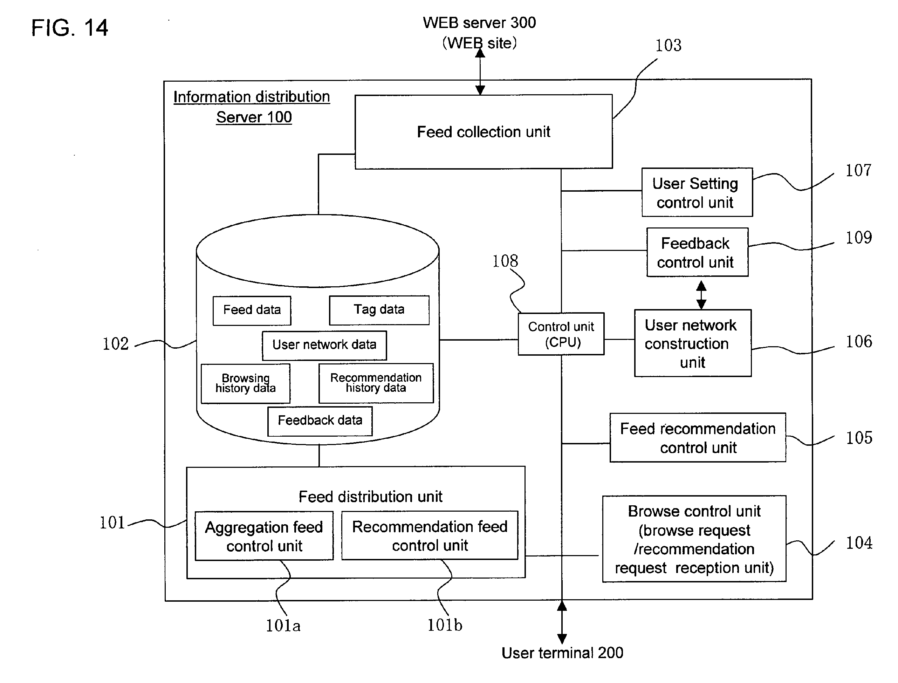

Fig. 14 is a block diagram showing the configuration of the information distribution server 100. The information distribution server 100 comprises a feed distribution unit 101, an information distribution DB 102, a feed collection unit 103, a browse control unit 104, a feed recommendation control unit 105, a user network construction unit 106, a user setting control unit 107, and a feedback control unit 109. The feed distribution unit 101 controls the distribution of feeds to the user terminals 200. The information distribution DB 102 stores feed distribution setting information, tag information to be included in feeds, feed browsing histories of respective users, recommendation histories which are stored when a user recommends a feed to another user or when a recommended feed is created, and user significances between users in user networks. The feed collection unit 103 collects the latest feeds from the respective WEB servers 300 in response to a feed collection request from the user terminals 200, based on the users' feed distribution setting information which is stored in the information distribution DB 102. The browse control unit 104 receives a feed browse request and a recommendation request from the user terminals 200, and stores the browsing histories and feed recommendation histories of the users into the information distribution DB 102. The feed recommendation control unit 105 calculates recommendation contribution factors of other users on feeds with respect to a user in a user network. The user network construction unit 106 calculates user significances between users from the similarities of user preferences based on the browsing histories of the users on feeds, and creates or constructs user networks in which users are associated with each other depending on the user significances. The user setting control unit 107 provides the user terminals 200 with a registration screen (WEB page) for setting and registering feeds which the users want to have distributed, and making various settings for feed acquisition. It also stores setting registration information entered from this WEB page into the information distribution database 102 as feed distribution setting information on each user. The feedback control unit 109 provides a feedback function for making a feedback from the user terminals 200 as to feeds distributed. These units are controlled by a control unit (CPU) 108.

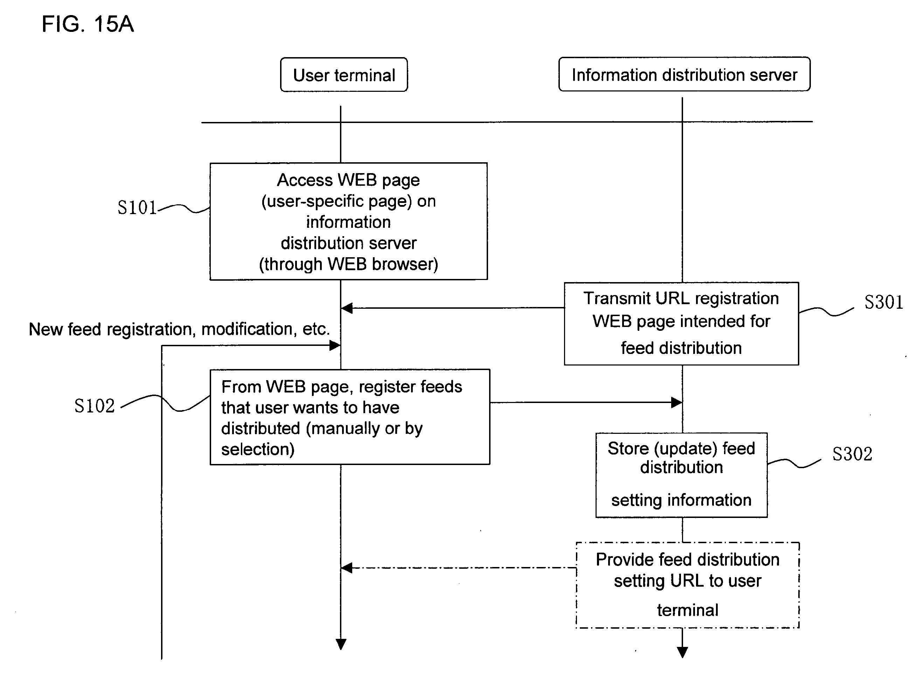

The individual components of the information distribution server 100 and the transition of processing of the information distribution system will now be described with reference to Figs. 15A to 15C . It should be noted that what the information distribution system of the present embodiment distributes to users are both feeds that the users themselves want to have distributed and recommended feeds that are generated by information filtering.

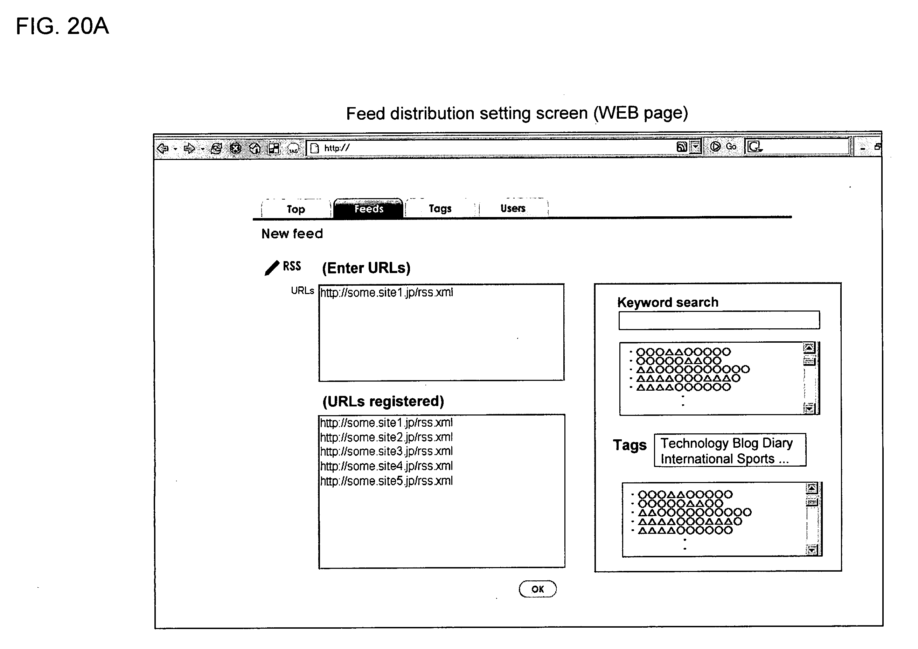

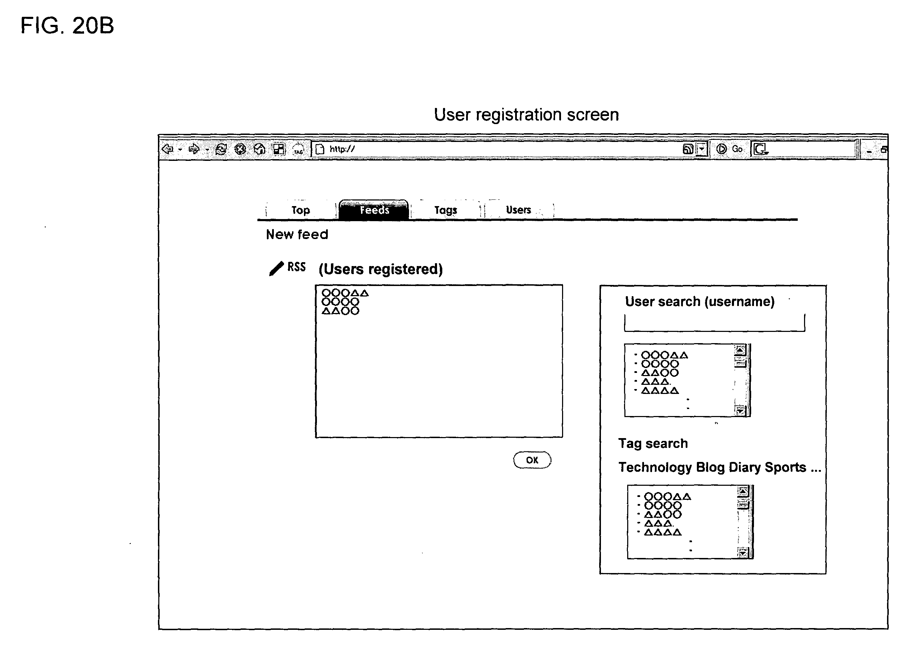

Initially, a user accesses the URL setting registration WEB page intended for feed distribution, provided by the information distribution sever 100, through a WEB browse on his/her user terminal 200 (steps S101 and S301). On the URL setting registration WEB page, the user inputs the URLs of feeds that he/she want to have distributed (step S102). Fig. 20A shows an example of the URL setting registration WEB page (being a user-specific WEB page) to be provided through the WEB browser on the user terminal 200. The user registers the feeds he/she wants to have distributed into the information distribution server 100 by selecting and setting the desired feeds to be distributed from among a feed list or the like that contains search hits on feeds (keyword search or tag search). The user may directly enter the URLs of WEB servers (WEB sites) that provide the feeds if the URLs are known in advance.

The user setting control unit 107 provides this feed distribution setting URL or WEB page. This user setting control unit 107 stores the information selected or entered through the WEB page in the information distribution database 102 as feed distribution setting information on each user (step S302).

If the feed reader is of install type, one URL intended for feed distribution that is provided by the user setting control unit 107 is set into the feed reader so that the plurality of feeds set on the URL setting registration WEB page are distributed to the feed reader. If the feed reader is of WEB type, the set feeds are distributed (displayed) on a feed browsing WEB page which is the same as or separate from the URL setting registration WEB page (feed distribution setting WEB page).

The feeds in XML format provided from the respective WEB sites are each composed of the feed header of the web site + article 1 + article 2 + .... The aggregation feed control unit 101a of the present embodiment thus removes the feed headers of the respective feeds collected, thereby extracting only the articles of the feeds. That is, each article extracted constitutes one single article item which includes the published date and time of the article, the title or summary of the article, URL information, and tag information. An aggregated feed is thus generated by removing the feed headers from the respective feeds to extract article items, aggregating these article items extracted into one feed, and adding an aggregated feed header corresponding to each user.

More specifically, in the information distribution system according to the present embodiment, the feed readers on the user terminals 200 do not acquire feeds from the respective feed providing WEB sites independently as heretofore. Instead, the information distribution system collects a plurality of feeds at a time based on the feed distribution setting information set therein, and aggregates the plurality of feeds collected and provides the same to the user terminals 200.

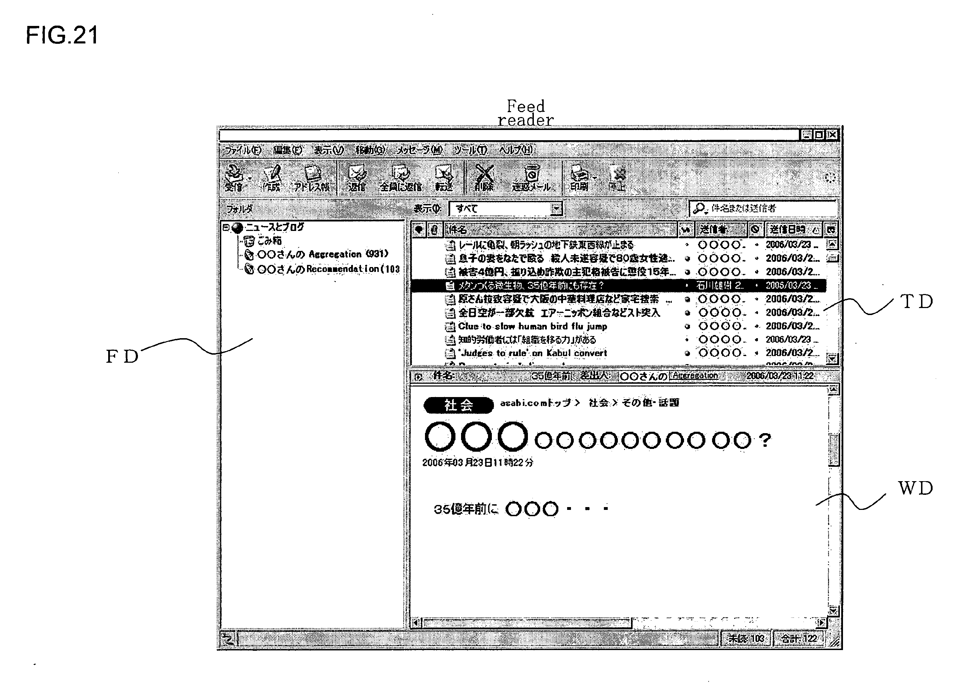

Fig. 21 is a diagram showing an example of the feed reader of install type on the user terminal 200. An aggregated feed and a recommended feed each appear in a feed list display section FD of the feed reader. The feed reader also has a title list display section TD and a WEB browser section WD. The title list display section TD shows a plurality of pieces of information and title information on articles (article items) included in the aggregated feed or the recommended feed. When the user selects a piece of title information in the title list display section TD with a mouse or other selecting means, a feed request signal for the article item selected is transmitted to the information distribution server 100, and a WEB page from the WEB server 300 that distributes the feed selected appears on the WEB browser section WD. Recommended feeds will be described later.

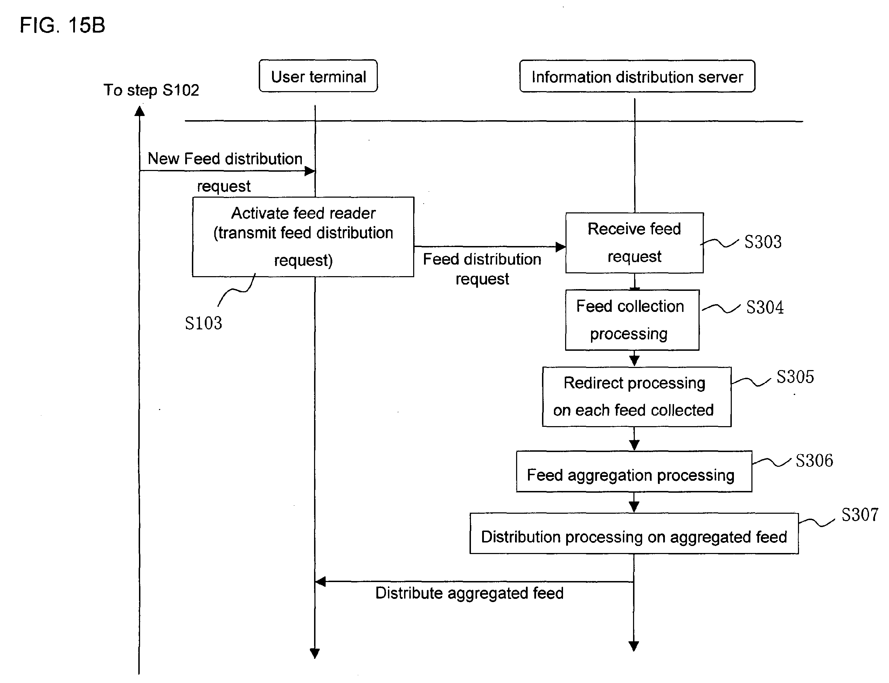

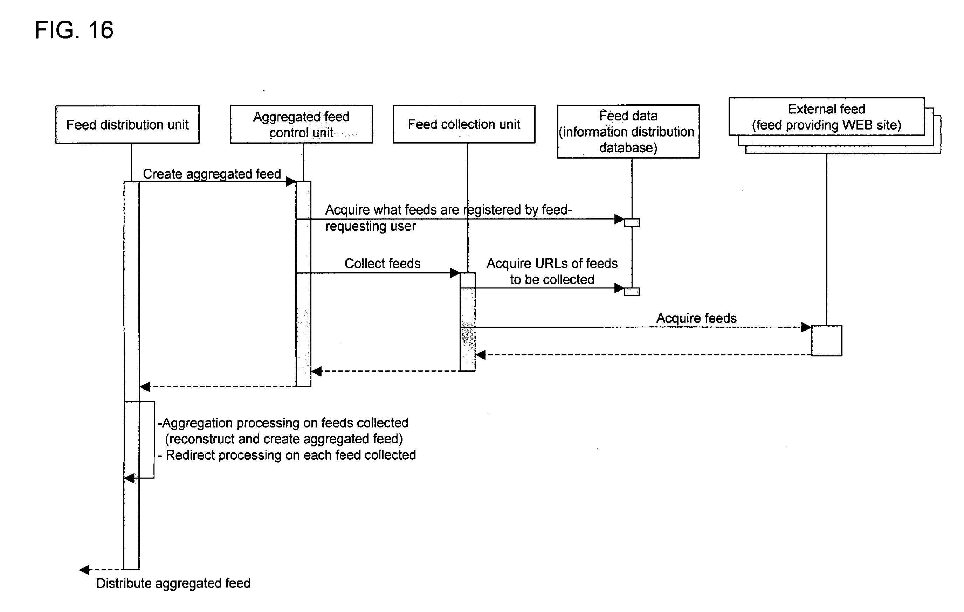

As shown in Figs. 15B and 16, the feed distribution processing to the user terminal 200 is performed by transmitting a feed distribution request from the user terminal 200 to the information distribution server 100 when triggered by the user activating the feed reader (the user accesses the WEB page) or taking the action of selecting a registration feed in the feed list display section FD (step S103).

In response to receiving feed distribution request from the user terminal 200(step S303), the aggregation feed control unit 101a acquires the feed distribution setting information on the feed-requesting user from the information distribution database 102 and requests the feed collection unit 103 to collect feeds based on the URLs of the respective feeds included in this feed distribution setting information. Based on the feed URLs, the feed collection unit 103 performs connection processing with the WEB servers 300 that provide the feeds, and acquires the latest feeds provided by the WEB servers 300 (step S304) . Then, the aggregation feed control unit 101a performs redirection processing on each feed (the URLs of a respective plurality of article items included in the feed) collected by the feed collection unit 103 (step S305).

In the redirection processing of the present embodiment, if the information server 100 of the present embodiment has URL1 of "www.oooo.co.jp", the URL1 of the information distribution server 100 will be added to URL2 of a feed collected. For example, if feed A has URL2 of "www.ΔΔΔΔ.co.jp", then the URL3 of the feed after the redirection processing is "www.oooo.co.jp/www.ΔΔΔΔ.co.jp". In the redirection processing of the present embodiment, parameters such as an ID of the feed to be distributed are also added to the URL3 in order to allow for the acquisition of user browsing histories. For example, feed IDs are previously assigned to the respective feeds in the feed distribution setting information stored in the information distribution database 102. Then, a corresponding feed ID is added to create URL4 = "www.oooo.co.jp/feed ID/www.ΔΔΔΔ.co.jp". It should be appreciated that the IDs of the users for the feeds to be distributed to and the IDs of article items may also be used as parameters in addition to feed IDs.

Then, the aggregation feed control unit 101a synthesizes and aggregates the redirected feeds, thereby generating one single aggregated feed in XML format (step S307). The feed distribution unit 101 distributes the aggregated feed to the user terminal 200.

When the user selects a plurality of pieces of information and title information on articles (article items) included in the aggregated feed in the title list display section TD, in order to browsing distributed feed, a feed browse request for the article item selected is transmitted to the information distribution server 100 from the user terminal 200 (step S104). The browse control unit (browse request /recommendation request reception unit) 104 performs a browse request processing in response to receiving the feed browse request. Specifically, the browse control unit 104 performs redirect response processing when receiving the browse request for a feed (step S309) and stores the browsing history on the article item browsed by the user (feed browsing history) into the information distribution database 102 as the user's browsing history (step S310). The browse control unit 104 also instructs the user network construction unit 106 to perform the processing of constructing a user network (creating and updating user network information) based on the feed browse request (browsing history) of this user (step S311). Acquiring this browsing history, the recommendation feed control unit 101b performs recommended feed generation processing (step S313) including recommendation contribution factor generation processing by the feed recommendation control unit 105 (step S312). Recommended feed distribution processing is then performed (steps S314 and S315). The browse request processing, recommended feed generation processing, and the like, including this user network construction processing, will be detailed later.

In the information distribution system according to the present embodiment, as shown in Fig. 13, the processing for acquiring the user's browsing history entails redirection processing for each article item of the aggregated feed. A browse request for each article item of the aggregated feed from the user terminal 200 is thus not transmitted directly to the WEB site 300 to which the browse-requested article item pertains (route C), but to the information distribution server 100 of the present embodiment (route A). The information distribution server 100 then performs the redirect response processing so that the WEB page that provides the feed (route B) appears on the WEB browser of the user terminal 200. The browse control unit 104 performs browsing history storing processing on the feed, and the user network construction unit 106 creates (updates) user network information.

Consequently, according to the present embodiment, the WEB server 300 is accessed through these connection routes A and B while the user browses the WEB site as if connected directly to the corresponding WEB server 300 based on the feed browse request selected. That is, according to the information distribution system of the present embodiment, the feed browsing histories of the_users can be acquired without any particular operation or application, and are instead based on daily feed selections, WEB site accesses, and the like that are made when the users browse information.

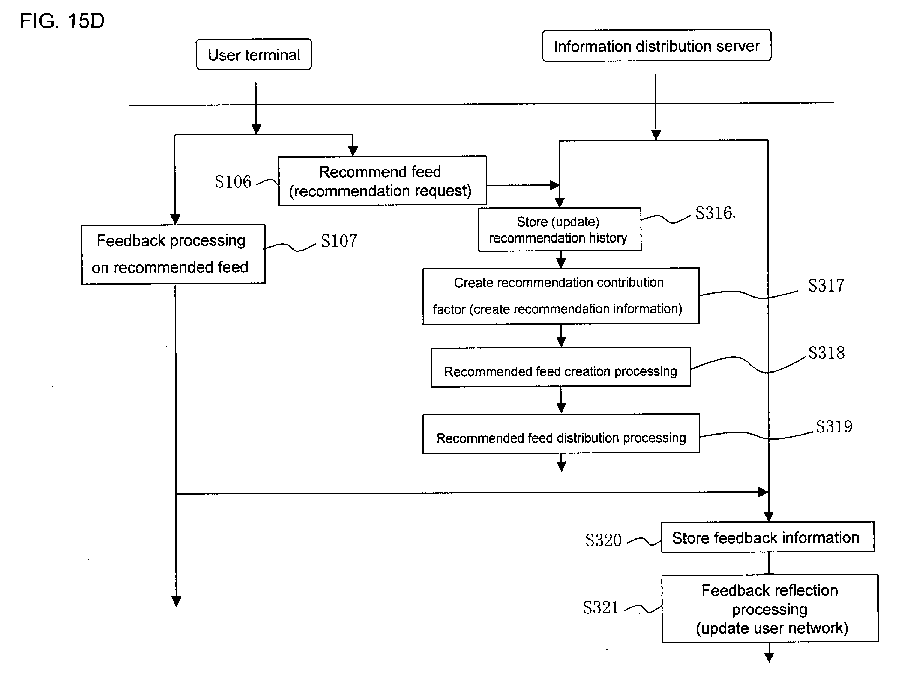

As shown in Fig. 15D, from among possible actions on feeds, the user may take a recommendation action for recommending a browsed feed to other users (step S106). The feed recommendation action by the user is transmitted from the user terminal 200 to the information distribution server 100 as a recommendation request for that feed. The feed recommendation control unit 105 then performs the processing of storing the recommendation history (step S316) and the recommendation contribution factor generation processing (step S317) before the recommendation feed control unit 101b generates recommended feeds for distribution (steps S318 and S319).

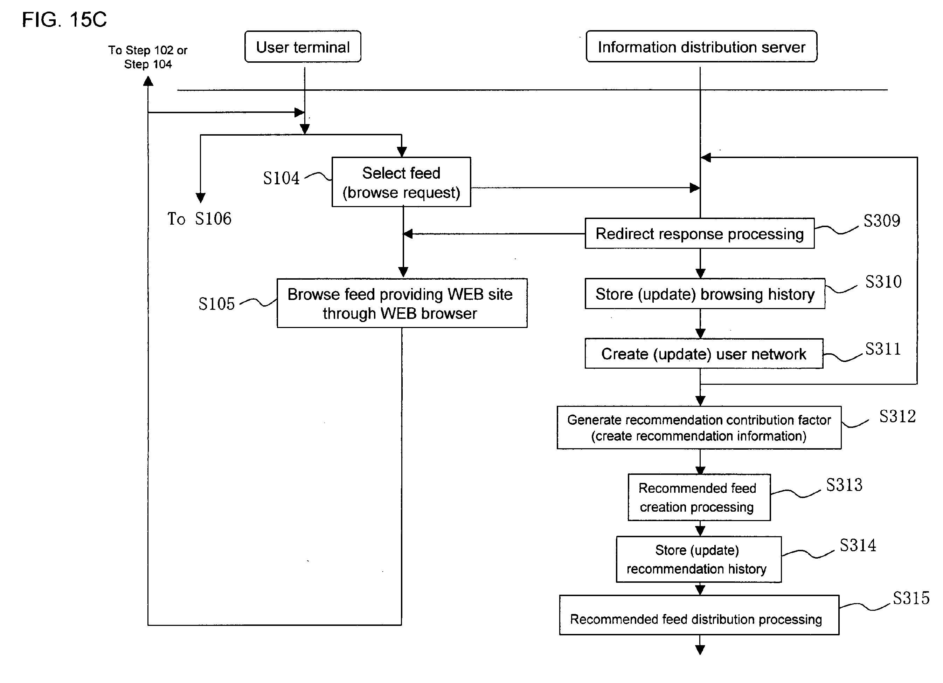

As above, according to the present embodiment, recommended feeds are generated not from the feeds that the user himself/herself want to have distributed, set from the URL setting registration WEB page, but when triggered by a feed browsing action or feed recommendation action by other users in the user networks of the user. The recommended feeds are generated both through the first processing of creating recommended feeds utilizing the recommendation contribution factors of the other users in the networks on feeds with respect to the user to be recommended (steps S312 to S315 in Fig. 15C) and through the second processing of simply employing feeds recommended by the other users as recommended feeds (steps S107 and S316 to S319 in Fig. 15D).

The present embodiment also provides the feedback function, which includes acquiring feedback information on recommended feeds from the users (user terminals 200), changing the user significances between the users in real time, and weighting feeds in accordance with the latest relationships between the users and distributing the same to the users (steps S108, S320, and S321).

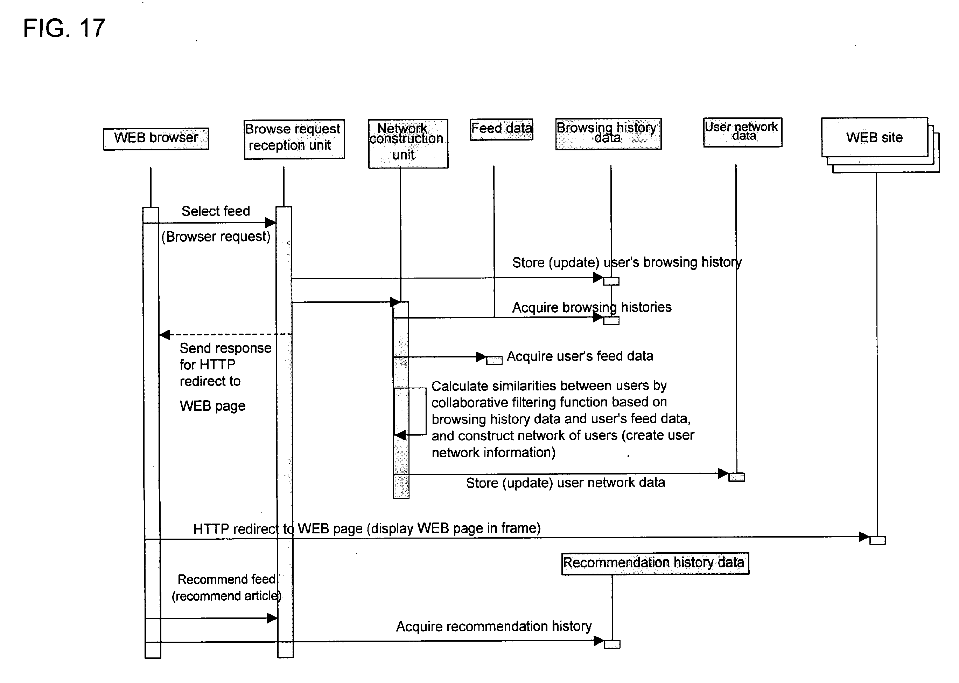

With reference to Figs. 17, 18A to 18C, and 19A to 19C, a description will now be given in detail of the browse request processing, the recommended feed generation processing, and the feedback processing of the information distribution systemaccording to the present embodiment described above.

### <Browse request processing>

As shown in Fig. 17, the browse request processing of the information distribution system according to the present embodiment consists of two parts. One of them is the redirect response processing and the processing of storing the user's browsing history, which are performed by the browse control unit 104 after a feed browse request from a user terminal 200 is received. The other is the processing of creating and updating the user network information to be performed by the user network construction unit 10 6. As mentioned previously, the aggregated feed and the recommended feed to be distributed to the user terminal 200 are subjected to redirection processing. Thus, when the user selects a feed displayed on the feed reader of the user terminal 200, the WEB server 300 that provides the feed (contents) is not accessed directly, but instead is accessed indirectly once through the information distribution server 100 of the present embodiment. This makes it possible to acquire the browsing history of the user based on feeds, including which feeds have been selected by the user. As described above, the URLs of the feeds (article items) to be distributed to the user are accompanied by browsing parameters such as the IDs of the feeds, the ID of the feed-distributed user, and the IDs of the respective article items. The browse control unit 104 then acquires the browsing parameters included in URL when an access request is made from the user terminal 200 based on the feed browse request from the user, i.e., the URL subjected to the redirection processing. The browse control unit 104 stores the user's browsing history into the information distribution database 102 based on these browsing parameters.

The browsing histories stored in the information distribution database 102 include: browsing histories on feeds indicating when (date and time) and how many times which user has browsed what feed; browsing histories indicating when (date and time) which user has browsed information or articles pertaining to which feed; and browsing histories indicating when and how many times which user has browsed feeds with what tag information. For example, the information distribution database contains data such as user A has browsed feed A twice and at what time; user A and user B have browsed feed A twice and three times, respectively, and at what time; and user A and user B have browsed a feed having tag information of X four times and six times, respectively, and at what time; an order of browsing a feed of user A is the first (a total number of views of the feed is three/rank 1), or a the order of browsing a feed of user B is the third (a total number of views of the feed is three/rank 3).

Hereinafter, the browse request processing of the present embodiment will be described in detail with reference to Fig. 17. As shown in Fig. 17, a user initially selects a desired article item to browse from those displayed on the title list display section TD of the feed reader of his/her user terminal 200, using a mouse or the like. The WEB browser section WD of the feed reader has an internet access function, which is used to access the information distribution server 100 of the present embodiment in accordance with the URL included in the article item, subj ected to the redirection processing. The browse control unit 104 receives the access from this user terminal 200 as a user's browse request for a feed. Receiving the user's feed browse request, the browse control unit 104 sends a response to the WEB browsing section WD of the user terminal so as to make an HTTP redirect notification to the WEB server (WEB page) that provides the user-requested feed (redirect response processing). It also stores this feed browse request into the information distribution database 102 as the browsing history data on the user.

After the processing for storing the user's browsing history is completed, the browse control unit 104 outputs a creation request instruction to the user network construction unit 106 so as to create (update) user network information. On receiving the request for the creation (update) processing from the browse control unit 104, the user network construction unit 106 acquires the browsing history data and the feed distribution setting information on all the users, which are registered in the information distribution database 102.

The user network construction unit 106 then calculates similarities between a plurality of users (user significances) based on their browsing histories and the feed distribution setting information acquired utilizing the method of calculating preference similarities which is used in conventional collaborative filtering techniques. Specifically, user preferences are calculated based on the browsing histories and the feed distribution setting information, and the similarities between these user preferences are calculated to create the user significances between the users. The user network construction unit 106 then creates a user network which associates users having predetermined significances with each other, and stores this user network into the information distribution DB 102. In addition, it is possible to extract users sharing a high number of similarities, and based on the browsing histories of these users, store feeds that are browsed frequently and tag information selected frequently by the users in the user network in the form of an additional table. Nevertheless, all the similarities between a certain user A and all the other users (the similarity of user B to user A, the similarity of user C, the similarity of user D, ..., and vice versa) may, for example, be instead stored as user relational information. Then, when user network information is in use, users may be extracted based on those similarities, and the browsing histories of the extracted users may be acquired from the information distribution database 102 in order to create the user network information as needed without any additional table or the like being required. Consequently, the user network information according to the present embodiment has only to contain, as a minimum, the preference similarities between all the users. It should be appreciated that this network construction unit 106 constructs the user network (creates and updates the user network information) each time a browsing history is added or updated, i.e., a feed browse request from a user is received. The latest user networks are thus constructed in real time.

As above, the user network construction unit 106 constructs a user network by associating a plurality of users having similar preferences through collaborative filtering based on the browsing histories of the respective users on each feed. The preferences of the users are calculated from three common factors including the users' browsing histories. A first factor is what feed the users have registered a distribution request for (feed distribution setting information). A second factor is which feed the users have browsed. A third factor is which tag information the browsed feed pertains to. These common factors of user preferences are taken into account when calculating the preferences of the respective users.

For example, when user X has registered for feed A in the feed distribution setting information and makes a browse request for this feed A, the user's preference for this feed A shall be high. The user preferences for all the feeds can be calculated in order to determine similarities between the users. That is, all users who have preferences within predetermined values for feed A are extracted, and the similarities of one user with the other plurality of users are calculated in the range of 0 to 1 depending on their preferences. Similarly, pieces of tag information to which the browsed feeds pertain are extracted from the browsing histories of the users, and the user preferences for each piece of tag information are calculated in order to determine the similarities between the users who are associated with each other depending on the preferences on tag information. The user network information created by the user network construction unit 106 thus establishes an association between a plurality of users that share a high number of similarities. It also includes the browsing histories of this plurality of users, i.e., the feeds browsed by the users in the user network and the tag information on the feeds browsed. In other words, the user network information carries the feeds and tag information of interest to the entire user network.

As above, the user network provided by the information distribution system of the present embodiment does not represent the framework of human relationships (friends and acquaintances) between users, but is created based on the relationship between feeds and users and from the daily action histories of the users on the Internet without the intention of the users. Then, this user network is utilized for the recommended feed generation processing and the like of the recommendation feed control unit 101b and the like to be described later.

### <Recommended feed generation processing>

In the present embodiment, recommended feeds are created both through the first processing shown at steps S312 to S315 of Fig. 15C and through the second processing shown at steps S107 and S316 to S319 of Fig. 15D. In the first processing, recommended feeds are generated utilizing the recommendation contribution factors of the other users in the user network with respect to the user to be recommended, as to the feeds to be recommended. In the second processing, feeds recommended by the other users are simply employed as recommended feeds. The recommendation contribution factors are used both in the first processing and in the second processing, and are provided to the users as recommendation information pertaining to the recommended feeds.

Among possible user actions on feeds according to the present embodiment are previewing a feed, transferring a feed (sharing a feed with other users), saving a feed, accessing (opening) a feed providing site, and staying in a feed providing site for more than a predetermined period. Then, in the present embodiment, a feed recommendation action, i.e., the action of transferring a feed in order to share it with another user is used as a trigger to perform the recommended feed generation processing of the second processing. The feed browsing actions other than the feed transfer, i.e., the user actions on feeds such as previewing a feed, saving a feed, accessing a feed providing site, and staying in a feed providing site for more than a predetermined period, are used as triggers to perform the recommended feed generation processing of the first processing. It should be appreciated that the user actions may be defined arbitrarily, i.e. , whether user actions on feeds correspond to recommendation or not may be set arbitrarily, and not limited to the foregoing. For example, in the first processing, user actions on feeds such as previewing a feed and accessing a feed providing site may be excluded from the triggers for the recommended feed generation processing.

Information on these user actions on feeds can be collected by using WEB browser functions.
Specifically, a not-shown WEB management unit usually performs screen control and communications between the user terminal 200 and the information distribution server 100 through a WEB browser. The user actions made from the user terminal 200 through the WEB browser are thus transmitted to the information distribution server 100 so that the WEB management unit can acquire the information on the user actions. These actions collected on the WEB browser (being a feed reader), including previewing a feed, transferring a feed, saving a feed, accessing (opening) a feed providing site, and staying in a feed providing site for more than a predetermined period, are stored into the information distribution DB 102 as a browsing history.

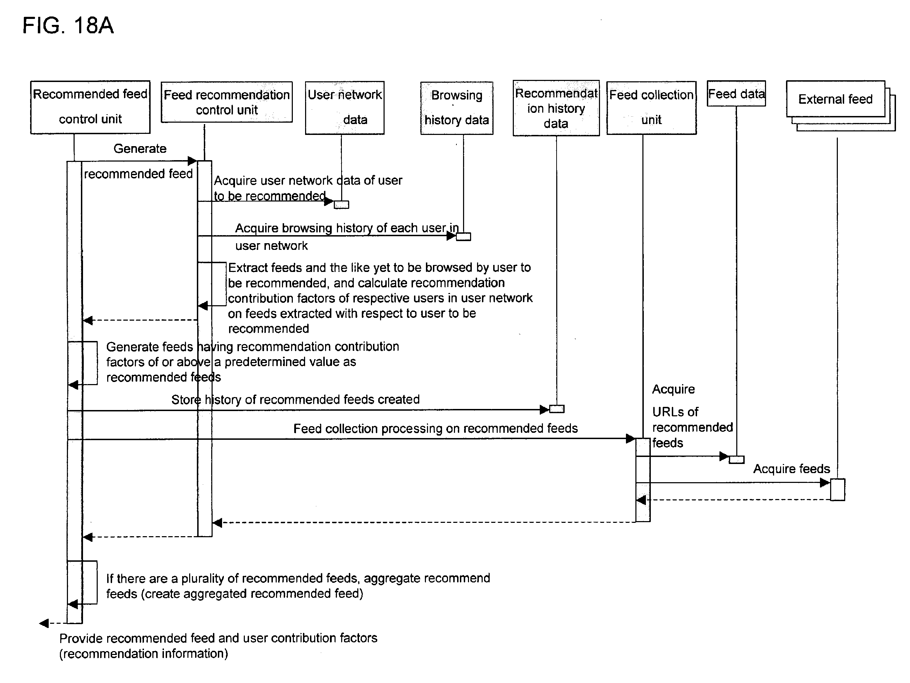

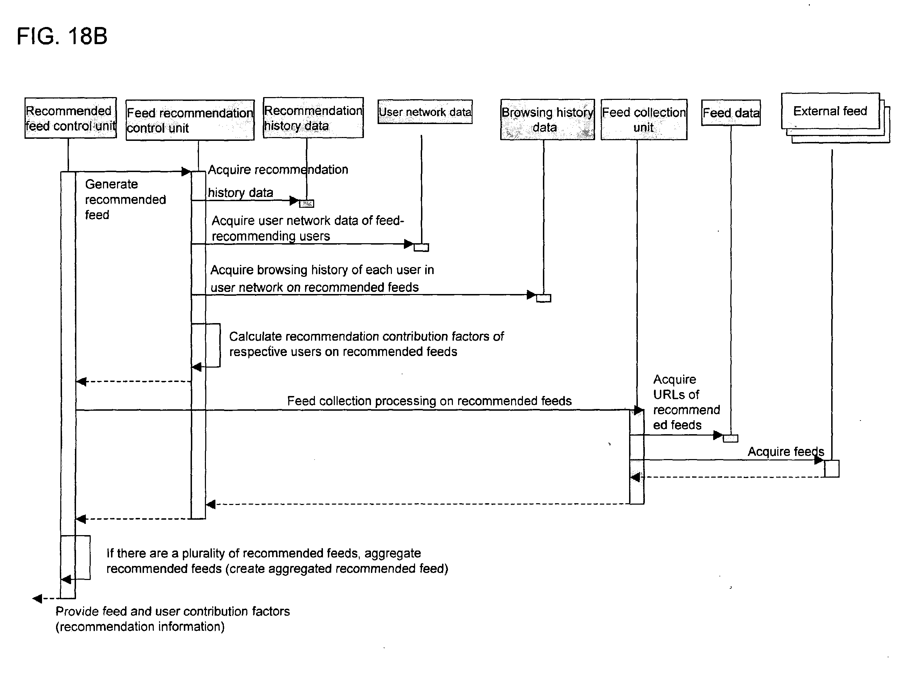

Figs. 18A and 18B are diagrams for explaining the foregoing first processing flow and the foregoing second processing flow, respectively. A description will now be given of the first processing of Fig. 18A.

This first processing is intended to create a recommended feed when triggered by the feedbrowsing action of any user, not necessarily in the user networks, to whom information is distributed from this information distribution system. The recommendation feed control unit 101b requests the recommendation contribution factor generation processing of the feed recommendation control unit 105 after the steps S310 and S311 of Fig. 15C. The feed recommendation control unit 105 acquires the user network information that is created or updated, and acquires the feed browsing histories within this user network. It then extracts feeds that have not been browsed by the user to be recommended or that have been distributed to the user to be recommended but not browsed yet, and calculates the recommendation contribution factors of the respective users in the network on the extracted feeds.

Recommendation contribution factors are the degrees of contribution, to the user to be recommended, of the other users in the user network on a feed to be recommended, and are calculated from the browsing histories of the other users on the feed to be recommended and the user significances between the user to be recommended and the respective other users in the user network. Among the foregoing browsing histories, ones that indicate which users browsed the feed in what order in the total number of views are used here. The reason for this is that the higher the order of browsing of the feed to be recommended is, the earlier the information is considered to be found, contributing to the recommendation of that feed. The total number of views of this feed and the order of browsing of the recommending users are significant factors for (in the process of) evaluating the recommendation contribution factors. For example, a user who ranks high in the order of browsing a feed with a large number of views in total can be evaluated to have a higher recommendation contribution factor than one who ranks high in the order of browsing a feed with a small number of views in total. Moreover, even when ranking low in the order of browsing, a large number of views in total can be translated into that the information is popular and highly useful. In such cases, the recommendation contribution factors may be made higher than when the total number of views is small.

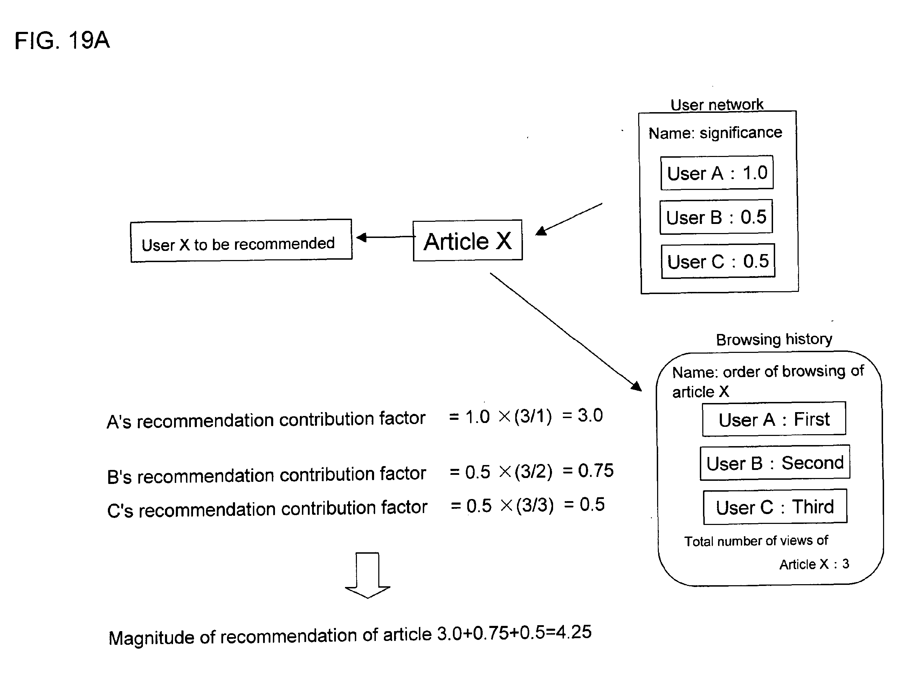

Fig. 19A is a schematic diagram for explaining the method of calculating the recommendation contribution factors. A recommendation contribution factor is calculated as (user significance) x (the total number of views of the article / the order of browsing of the user). Suppose that X is the user to be recommended, A, B, and C are the other users in the user network of the user to be recommended, and the user significances to user X are user A = 1. 0, user B = 0. 5, and user C = 0. 5. Suppose also that the total number of views of a feed that has not been browsed by the user to be recommended is three, and users A, B, and C rank the first, the second, and the third in the order of browsing, respectively. For this article X, users A, B, and C here have recommendation contribution factors of 3.0, 0.75, and 0.5, respectively. It should be appreciated that the foregoing total number of views of the feed is that of all users including ones outside the user network, not limited to that within the user network.

Then, the total sum of the recommendation contribution factors calculated is regarded as a recommendation magnitude of article X. If this recommendation magnitude reaches or exceeds a predetermined value, this feed is then generated as a recommended feed highly useful to the user to be recommended. In addition to the processing of extracting a recommended feed on the basis of the threshold determination on recommendation magnitude, a recommended feed is also desirably generated when there is any user who reaches or exceeds a predetermined value of recommendation contribution factor, such as a recommendation contribution factor of 3.0, even if the feed has a low recommendation magnitude. The information on this recommended feed generated is stored into the information distribution DB 102 as recommendation history data on the recommended feed, which associates the recommended user with the users having recommendation contribution factors on the recommended feed.

While the recommended feeds of the present embodiment are composed of such feeds as ones that have not been browsed by the user to be recommended and ones that have been distributed to the user but not browsed yet, they may also be generated based on the foregoing tag information pertaining to the feeds.

Specifically, the feed recommendation control unit 105 extracts all the tag information that the users in the user networks have ever browsed that is included in the user network information created by the user network construction unit 106. Suppose for example, that the user network information on user A includes user X (with a user significance of 0.5) and user Y (with a user significance of 0.3), and that the tag information included in the browsing history of user A includes "computer" and "gourmet." Suppose also that the tag information of interest to the entire user network, i.e., the tag information that the three users, or user A, user X, and user Y, have ever browsed includes "computer," "gourmet," and "car." Then, user A has not browsed the tag "car" (a plurality of feeds pertaining to the tag "car").

The feed recommendation control unit 105 extracts feeds that pertain to tag information of interest to the user networks of the user to be recommended, and are not included in the feed distribution setting information or the browsing history of the user, as recommended feed candidates.

Then, the recommendation contribution factors of the respective users in the user network of the user to be recommended on the recommended feed are calculated as described above, with the total sum of the recommendation contribution factors calculated serving as the recommendation magnitude on that recommended feed. When this recommendation magnitude reaches or exceeds a predetermined value, this feed is generated as a recommended feed highly useful to the user to be recommended.

When generating a recommended feed based on tag information, the recommended feed extracted may be one that has not been browsed in the user network of the user to be recommended. That is, if the feed has been browsed only by users outside the user network, it is impossible to calculate the recommendation contribution factors on the recommended feed since the users outside the user network have extremely low or zero user significance to the user to be recommended. Nevertheless, if the number of views of the feed by the users outside the user network exceeds a predetermined value, then the feed is likely to be useful to the user to be recommended.

Thus, in the present embodiment, the feed recommendation control unit 105, when generating recommended feeds using pieces of tag information, calculates the recommendation contribution factors on those pieces of tag information. For example, the browsing histories include the numbers of views and the date and time of browsing by user X and user Y on each of the tags "computer, " "gourmet, " and "car" as described above. The numbers of views of user X and user Y can thus be acquired independently. Suppose that the number of views of user X on the tag "car" is three, that of user Y is four, and the total number of view of the tag "car" is ten. The recommendation contribution factor of the user X on the tag "car" is then calculated as user significance of 0.5 x (the number of views of user X of 3 / the total number of views of 10). The recommendation contribution factor of the user Y on the tag "car" is calculated as user significance of 0.3 x (the number of views of the user Y of 4 / the total number of views of 10).

As above, the recommendation contribution factors of the respective users in the user network on pieces of tag information are calculated. This makes it possible to provide a feed distributed or browsed by users outside the user network as a recommended feed even if this feed pertains to tag information of interest to the user network of the user to be recommended and is not found in the feed distribution setting information or browsing history of any user in the user network.

It should be appreciated that the recommendation contribution factors on tag information are provided in the form of simple ratios to the total number of views, not taking account of the order of browsing which is used when calculating recommendation contribution factors on feeds. The recommendation contribution factors in this case desirably incorporate whether or not the tag or the feeds including the tag information have been browsed in recent date and time. That is, because the users within the user network have no browsing history on the feeds to be recommended, the lapse of time since the feeds pertaining to the tag information have been read the last time can be taken into account to make the feeds with the tag information more useful. Whether the browsing date and time are recent or not is given by Exp (t0-t(n, f)) where t0 is the current time and t (n, f) is the time when the user have browsed the recommended feed at the last time. The recommendation contribution factor on the tag information is desirably calculated as user significance x (the number of views by the user / the total number of views) x Exp(t0 - t (n, f)) .

As above, since performing the filtering processing by tag information to extract recommended feeds for the user to be recommended, it is possible to increase the range of feeds that can be recommendation candidates. For example, suppose that feeds pertaining to tag information "computer," which is of interest to user A and to the user networks of this user A, include any feed on "computer" (or any article item in the feed) that has not been browsed by user A and is of interest to other users outside the user networks. In such cases, the possibility for user A to want to browse or subscribe to this feed is high, and the information can be highly useful to user A. Feed information or articles without such common factors in the tag information, on the other hand, have low possibilities of being read by user A in the first place.

Then, the recommendation feed control unit 101b outputs a feed collection request to the feed collection unit 103 in order to acquire the latest versions of the recommended feed candidates extracted. the feed collection unit 103 acquires the URL of the feed to be collected from the information distribution DB 102 to acquires the feed to be recommended from the WEB sever 300 providing the feed.

Like the aggregation feed control unit 101a described above, the recommendation feed control unit 101b then performs feed aggregation processing in order to aggregate the article items extracted and then distributes the recommended feed aggregated (aggregated recommended feed) to the user terminal 200.

Fig. 18B is an explanatory diagram for explaining the second processing in the recommended feed generation processing according to the present embodiment. This second processing is intended to generate recommended feeds simply from feeds that are recommended by other users, and to also generate the recommendation contribution factors of the other users in the network on the recommended feeds as recommendation information. The user will thus receive both the recommended feeds and the recommendation information. Specifically, the browse control unit (browse request/recommendation request reception unit) 104 receives a recommendation request from a user terminal 200, and stores the recommendation request in the information distribution DB 102 as a recommendation history. Then, the storing of this recommendation history triggers the recommended feed generation processing according to the second processing.

Initially, the feed recommendation control unit 105 extracts users whose recommended feeds are not yet distributed to other users from the recommendation history data, and acquires the user network of each of the users. It then calculates recommendation contribution factors on the recommended feeds.

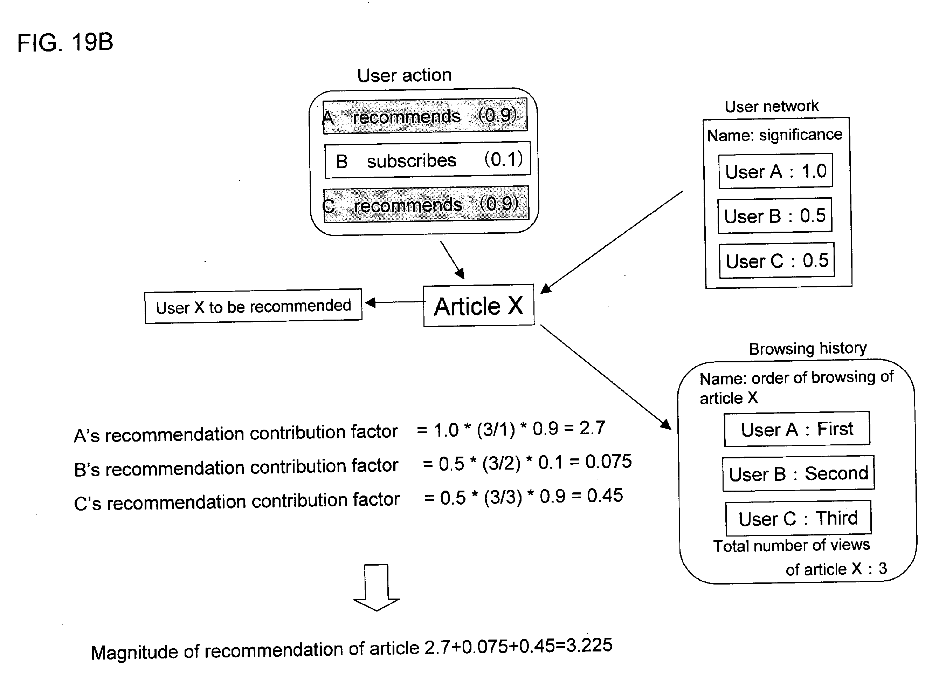

Fig. 19 B is a schematic diagram for explaining the process of calculating recommendation contribution factors according to the second processing. In the second processing, weightings are applied to a user who recommends a feed and to users who simply browse it so that the recommendation contribution factor of the recommending user becomes high.

That is, the recommendation contribution factor in the foregoing first processing is calculated as (user significance) x (the total number of views of the article / the order of browsing of the user). In this second processing, it is given by (user significance) x (the total number of views of the article / the order of browsing of the user) x the weighting. For example, weightings are given at a rate of 0.9 : 0.1 when recommending a feed and when simply browsing it. In the example of Fig. 19B, suppose that X is the user to be recommended, and A, B, and C are other users in the user network of the user to be recommended. The user significances to user X shall be user A = 1.0, user B = 0.5, and user C = 0.5. The total number of views of the recommended feed shall be three, and users A, B, and C shall rank the first, the second, and the third in the order of browsing, respectively. Suppose also that users A and C recommend this feed, and user B subscribes to it.

In this case, users A, B, and C have recommendation contribution factors of 2.7, 0.075, and 0.45 on article X, respectively. The total sum of the recommendation contribution factors calculated is the recommendation magnitude for the article X. This recommended feed is then distributed to the user to be recommended along with recommendation information which includes the recommendation magnitude and the recommendation contribution factors. It should be appreciated that if the recommendation magnitude or the recommendation contribution factors are extremely low, the feed may be hardly useful to the user to be recommended. Further filtering may thus be performed using the recommendation magnitude as a threshold. Moreover, even when the recommendation magnitude is equal to or lower than a predetermined threshold, the feed may be generated as a recommended feed if any of the recommendation contribution factors of the users reaches or exceeds a predetermined value, such as 3.0.

Subsequently, the recommendation feed control unit 101b outputs a feed collection request to the feed collection unit 103 in order to acquire the latest versions of the recommended feeds extracted. The feed collection unit 103 acquires the URLs of the feeds to be acquired from the information distribution DB 102, and acquires the feeds from the WEB servers 300 that provide the feeds.

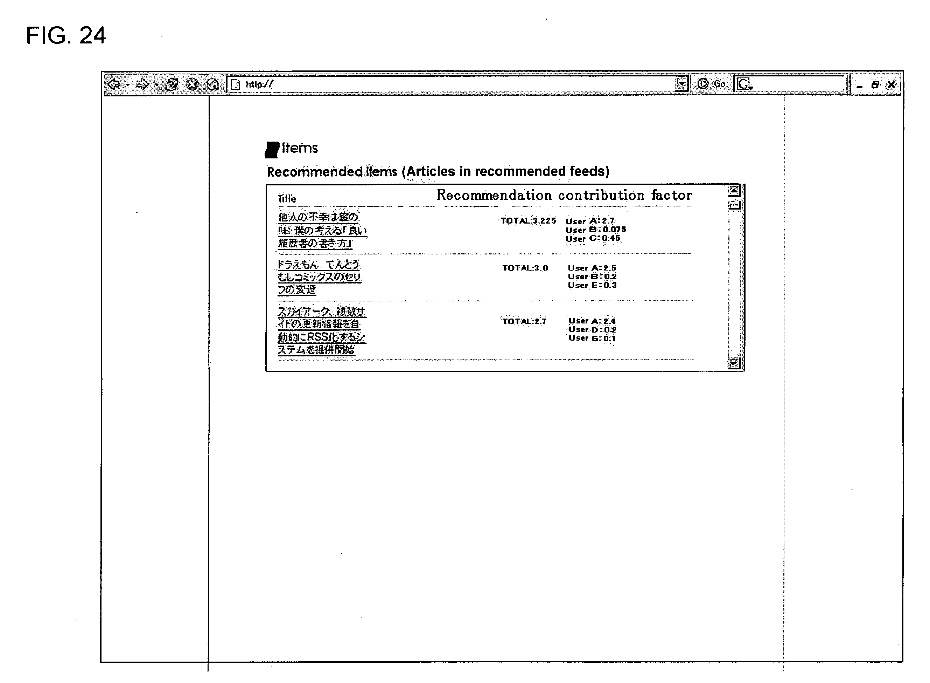

Like the foregoing aggregation feed control unit 101a, the recommendation feed control unit 101b then performs feed aggregation processing for aggregating the article items extracted. The recommended feed aggregated (aggregated recommended feed) is provided to the user terminal 200 along with the recommendation information (recommendation contribution factors) (see Fig. 24).

It should be appreciated that the recommendation contribution factors according to the foregoing second processing are calculated with such weightings as a rate of 0.9 : 0.1 when recommending a feed and when simply browsing it. As mentioned previously, the feed recommendation action, or the action of transferring a feed in order to share it with other users, is separated from the feed browsing actions other than the feed transfer, such as previewing a feed, saving, accessing a feed providing site, and staying in a feed providing site for more than a certain period of time, and the plurality of feed browsing actions are given a weighting of constant rate. Nevertheless, the plurality of feed browsing actions may be given different weightings instead. For example, recommendation contribution factors on a feed may be calculated with a weighting of 0.05 for the action of previewing a feed, 0.3 for the action of saving a feed, 0.15 for the action of accessing a feed providing site, and 0.2 for the action of staying in a feed providing site for more than a certain period of time. Since the user actions are given different respective weightings, it is possible to calculate recommendation contribution factors so as to reflect the relationships between the users and the feeds more accurately. This makes it possible to provide an information filtering function with a high level of accuracy.

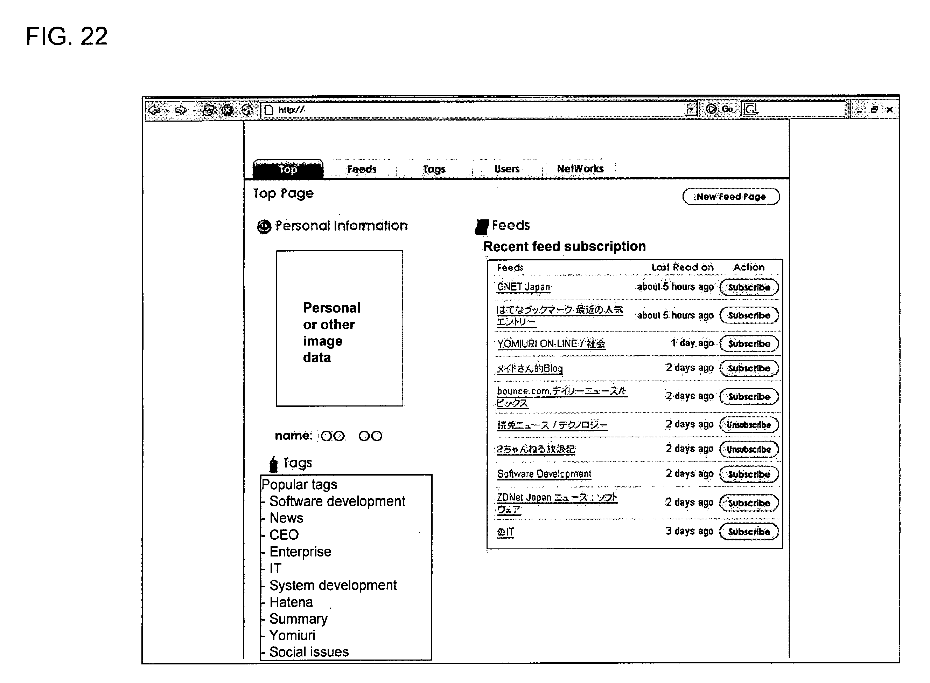

Figs. 22, 23, and 24 show examples of WEB pages of the information distribution system of the present embodiment provided to the user terminals 200.

The information distribution server 100 of the present embodiment posts various types of information generated by the foregoing browse request processing and recommended feed generation processing on a WEB page such as shown in Fig. 22, thereby providing the same to each user who has provided feed distribution settings. This WEB page shows profile information on that user, feeds that the user has subscribed to recently, tag information that is most popular among all the users, most popular feeds that have been subscribed to recently, and the like. From this WEB page, the user can make a distribution setting on newly-recommended feeds, and refer to the browsing history of the user.

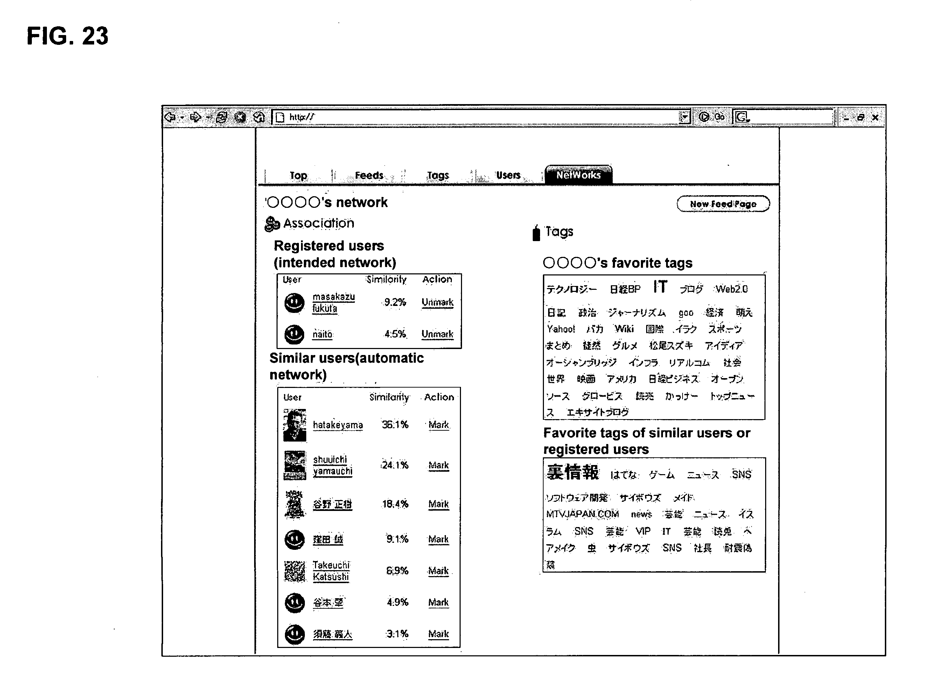

Fig. 23 shows a WEB page which shows the user network information on that user. On this WEB page, it is possible to refer to the information and similarity of each user in the user network that has been automatically created by the foregoing browse request processing, tag information of interest to the user himself/herself (tag information based on the browsing history of that user), and tag information of interest to the user networks.

Fig. 24 is a diagram showing a WEB page on which recommended feeds and recommendation contribution factors on those recommended feeds are displayed. When browsing the recommended feeds, the user can refer to the recommendation contribution factors in order to ascertain which feed is recommended by which user and how strongly.

### <Feedback processing>

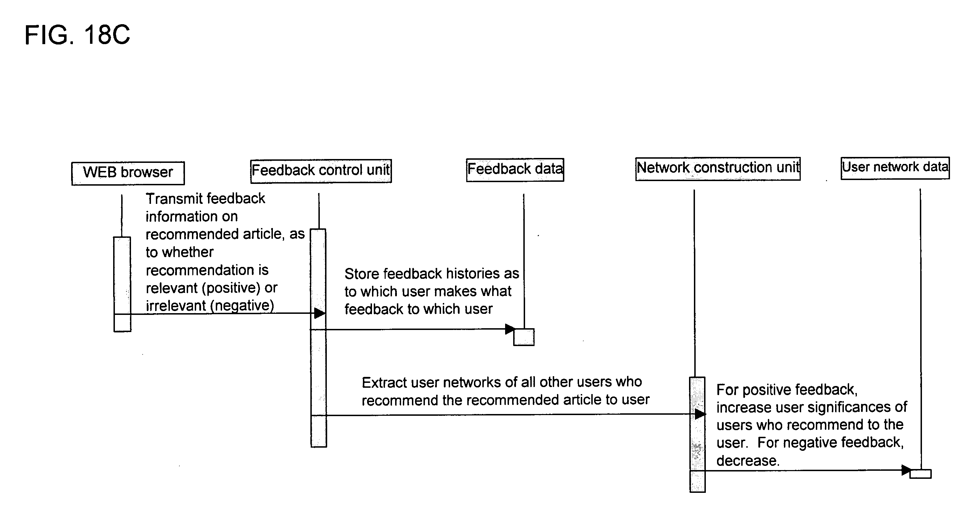

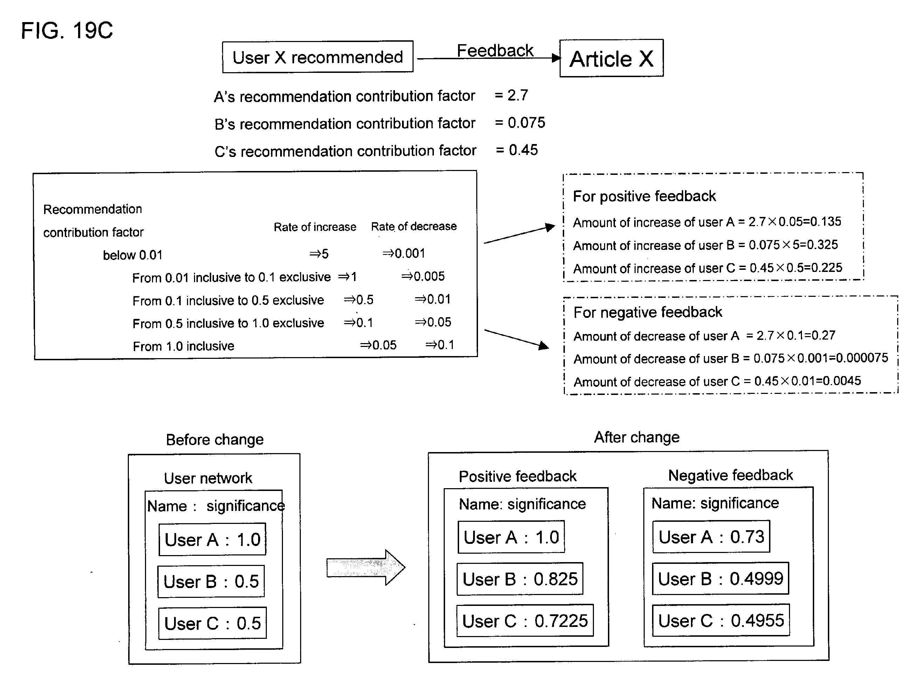

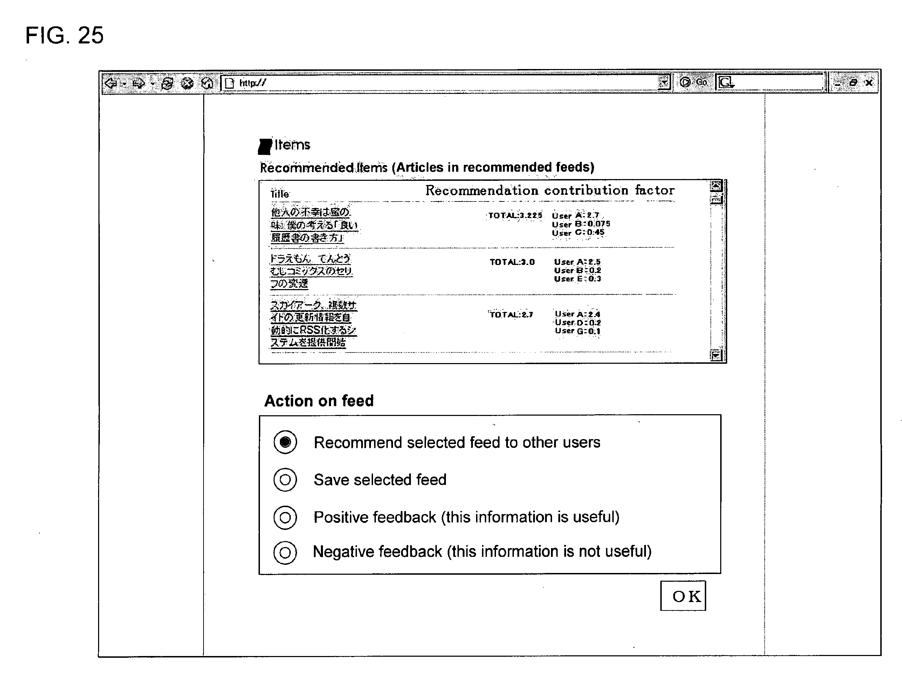

Fig. 18C is a diagram for explaining the processing of the feedback control unit 109 which provides the feedback function for making a feedback on a recommended feed. Fig. 19C is a diagram for explaining the transition where user significances between users vary depending on the feedback processing. Fig. 25 shows an example of the WEB page to be displayed on the user terminal 200 of the user, including a feedback screen.

In the present embodiment, as shown in Fig. 25, the user can make a feedback for a recommended feed whether the feed contains information that is useful to the user (positive) or not (negative).

As shown in Fig. 18C, when either a positive feedback or a negative feedback for the selected recommended feed is selected on the WEB page shown in Fig. 25 which includes the feedback screen, feedback information on the feed selected from the user terminal 200 is transmitted to the information distribution server 100. The feedback information includes pieces of information that indicate which feed the feedback is made for and whether the feedback is positive or negative. The feedback control unit 109 of the information distribution server 100 analyzes the feedback information received and stores the feedback data (feedback history) into the information distribution DB 102.

The feedback control unit 109 also requests the user network construction unit 106 to update user significances, i.e., to perform the processing for updating the user significances of the other users in the user network who have recommended the feed to the feedback user. The user network construction unit 106 receives information on the recommended user and the feedback information from the feedback control unit 109, and extracts the user network information (user significance) of the recommended user from the information distribution DB 102.

The user network construction unit 106 then determines whether the feedback is positive or negative based on the feedback information received from the feedback control unit 109. It then performs the processing of increasing the user significances of recommending users if the feedback is positive, and decreasing the user significances of the recommending users if the feedback is negative, whereby updating the user significances between the recommended user and the recommending users.

With reference to Fig. 19C, a description will now be given of the transition where user significances between users vary depending on the feedback processing. As shown in Fig. 19C, the user network construction unit 106 of the present embodiment performs the processing for increasing or decreasing the user significances of recommending users at rates of increase/decrease corresponding to the recommendation contribution factors. That is, in the present embodiment, if the feedback is positive, the user significances of users having low recommendation contribution factors are increased at rates that are higher than those of the user significances of users having high recommendation contribution factors. If the feedback is negative, the user significances of users having low recommendation contribution factors are decreased at rates that are lower than those of the user significances of users having high recommendation contribution factors.

As above, the user significances between users who recommend (contribute) the recommended feed that is fed back and a user who is recommended (user who provides the feedback) are changed at different rates depending on the recommendation contribution factors. This makes it possible to modify the user significances of the recommending users arbitrarily in view of whether the users tend to distribute or not to distribute information that is useful to the recommended user even if the users make similar daily actions or have similar preferences on the Internet. It is therefore possible to provide information filtering capability with a high real-time response to the values and preferences of the users. Moreover, the significances of users who distribute information that is useful to the user to be recommended can also be increased even if the users do not make similar actions daily or have similar preferences on the Internet. This allows information distribution over sufficiently wide networks of users.

According to the information distribution system of the present embodiment, the daily action histories of the users on the Internet are acquired without any burden being imposed on the users, and the user networks are constructed in order to associate users and feeds with each other. It is therefore possible to provide information filtering based on the relationship between the users and the feeds (information), and not on the human relationships between the users.

That is, it is possible to achieve information filtering where the relationships between the users can be changed by user actions on feeds in real time, so as to reflect the preferences and values of the users dynamically.

Then, the recommended feed generation processing generates recommended feeds in accordance with the recommendation contribution factors of other users on feeds when triggered by contributions on the feeds (the browsing actions of the users on the feeds). Consequently, the user actions including previewing a feed, transferring a feed (sharing a feed with other users), saving a feed, accessing (opening) a feed providing site, and staying in a feed providing site for more than a predetermined period of time are thus reflected in the automatic recommendation of feeds to other users. This also makes it possible to provide favorable information filtering based on user networks that are associated in a feed (information) oriented fashion, instead of the framework of on human relationships between the users.

Since recommended feeds are provided together with their recommendation information, the users are informed of how the information distributed is regarded by the other users in the user network, i.e., how strongly it is recommended by the other users in the user network. The users can thus easily make objective determinations on the use values of the information.

While the foregoing embodiment has dealt with a user network that is constructed automatically based on user significances, it is also possible, for example, for users to construct user networks intentionally. That is, a user can construct an intended user network by intentionally registering other users in whom the user is interested, such as friends who are known to have the same tastes or interests, as well as well known specialists and persons skilled in certain fields through a user registration screen provided by the user setting control unit 107 of the present embodiment. In addition, as shown in Fig. 24, users on the automatically constructed user network can be marked up so that the marked users are registered into the intended user network.

As above, the user networks of the present inventionmay include both intended user networks that are intentionally constructed by the users and automatic user networks that are constructed from the daily action histories of the users on the Internet without the intention of the users. It is therefore possible to perform information distribution using both the information filtering based on the human relationships between users and the information filtering of the present invention based on the relationships between users and feeds.

According to the present invention, the daily action histories (browsing histories) of the users on the Internet are acquired without any burden on the users, and a user network that associates the users and feeds (information) with each other is constructed. It therefore becomes possible to provide information filtering based on the relationships between the users and the feeds (information), and not on the human relationships between the users. This allows for useful information distribution that reflects weightings depending on the relationships between the users and variations in values, thereby achieving information distribution with a sufficiently wide range of information and user networks.

While preferred embodiments have been described, it is to be understood that modification and variation of the present invention may be made without departing from the sprit or scope of the following claims.

"This application claims priority from Japanese Patent Application No. 2006-332816 filed on December 11, 2006, which is hereby incorporated by reference herein."

## Claims

1. An information distribution system which collects a feed provided by a feed providing site and distributes the same to a user, comprising:
a feed acquisition means which acquires a feed from the feed providing site based on feed distribution setting information set by the user;
an aggregation feed control means which performs a redirection processing on the feed acquired and aggregates a plurality of the feeds subjected to the redirection processing to generate a aggregated feed, the redirection processing being intended to access the feed providing site through the information distribution system;
a browsing history database which stores a browse request for each of the feeds in the aggregated feed from a user as a browsing history of the user feed by feed; and
a recommendation feed control means which generates a recommended feed based on the browsing histories of a plurality of users having similar browsing histories on each feed.

2. The information distribution system according to claim 1, comprising a user network construction means which creates a user network including the users having similar browsing histories on each feed,
wherein the recommendation feed control means generates the recommended feed based on the browsing histories of the respective users belonging to the user network.

3. The information distribution system according to claim 2, wherein the user network construction means calculates preferences of the respective users on each feed using the feed distribution setting information and the browsing histories, and creates the user network based on the preferences.

4. The information distribution system according to claim 1, wherein the browsing history includes a browse request for each feed in the aggregated feed or a browse request for tag information associated with each feed.

5. The information distribution system according to claim 1, wherein the recommendation feed control means generates the recommended feed from among a plurality of feeds browsed by each of the plurality of users having similar browsing histories on each feed.

6. The information distribution system according to claim 1, wherein the recommended feed control means extracts tag information from feeds browsed by each of the plurality of users having similar browsing histories on each feed, and generates the recommended feed based on the tag information.

7. The information distribution system according to claim 1, wherein the recommended feed control means calculates significances of the plurality of users on a feed using the browsing histories and similarities of the users based on the browsing histories, and generates the recommended feed based on the significances.

8. The information distribution system according to claim 1, comprising a user registration means which sets an other user who distributes information useful to the user or a other user who has preference similar to that of the user,
wherein the recommended feed control means generates the recommended feed based on the browsing histories of the plurality of users having similar browsing histories on each feed or the browsing histories of the other users set by the user.

9. The information distribution system according to claim 1, wherein the recommended feed control means performs redirection processing on the recommended feed and aggregates a plurality of recommended feeds subjected to the redirection processing to generate an aggregated recommended feed, the redirection processing being intended to access the feed providing sites through the information distribution system.

10. An information distribution system which collects a feed provided by a feed providing site and distributes the same to a user, comprising:
a feed acquisition means which acquires a feed from the feed providing site based on feed distribution setting information set by the user;
an aggregation feed control means which performs a redirection processing on the feed acquired and aggregates a plurality of the feeds subjected to the redirection processing to generate an aggregated feed, the redirection processing being intended to access the feed providing site through the information distribution system;
a browsing history database which stores a browse request for each of the feeds in the aggregated feed from the user as a browsing history of the user feed by feed; and
a recommendation feed control means which generates a recommended feed based on browsing histories of other users set by the user, the other users distributing information useful to the user or having preferences similar to that of the user.

11. An information distribution apparatus which collects a feed provided by a feed providing site and distributes the same to a user, comprising:
a feed acquisition means which acquires a feed from the feed providing site based on feed distribution setting information set by the user;
an aggregation feed control means which performs a redirection processing on the feed acquired and aggregates a plurality of the feeds subjected to the redirection processing to generate a aggregated feed, the redirection processing being intended to access the feed providing site through the information distribution apparatus;
a browsing history database which stores a browse request for each of the feeds in the aggregated feed from a user as a browsing history of the user feed by feed; and
a recommendation feed control means which generates a recommended feed based on the browsing histories of a plurality of users having similar browsing histories on each feed.

12. An information distribution apparatus which collects a feed provided by a feed providing site and distributes the same to a user, comprising:
a feed acquisition means which acquires a feed from the feed providing site based on feed distribution setting information set by the user;
an aggregation feed control means which performs a redirection processing on the feed acquired and aggregates a plurality of the feeds subjected to the redirection processing to generate an aggregated feed, the redirection processing being intended to access the feed providing site through the information distribution apparatus;
a browsing history database which stores a browse request for each of the feeds in the aggregated feed from the user as a browsing history of the user feed by feed; and
a recommendation feed control means which generates a recommended feed based on browsing histories of other users set by the user, the other users distributing information useful to the user or having preferences similar to that of the user.

13. An information distribution method which collects a feed provided by a feed providing site and distributes the same to a user in an information distribution system, comprising the steps of:
acquiring a feed from the feed providing site based on feed distribution setting information set by the user;
performing a redirection processing on the feed acquired and aggregates a plurality of the feeds subjected to the redirection processing to generate a aggregated feed, the redirection processing being intended to access the feed providing site through the information distribution system;
storing a browse request for each of the feeds in the aggregated feed from a user as a browsing history of the user feed by feed; and
generating a recommended feed based on the browsing histories of a plurality of users having similar browsing histories on each feed.

14. An information distribution method which collects a feed provided by a feed providing site and distributes the same to a user in an information distribution system, comprising the steps of:
acquiring a feed from the feed providing site based on feed distribution setting information set by the user;
performing a redirection processing on the feed acquired and aggregates a plurality of the feeds subjected to the redirection processing to generate an aggregated feed, the redirection processing being intended to access the feed providing site through the information distribution system;
storing a browse request for each of the feeds in the aggregated feed from the user as a browsing history of the user feed by feed; and
generating a recommended feed based on browsing histories of other users set by the user, the other users distributing information useful to the user or having preferences similar to that of the user.

15. An information distribution system which collects a feed provided by a feed providing site and distributes the same to a user, comprising:
a feed distribution means which performs a redirection processing on a feed to be distributed to the user and distributes the feed, the redirection processing being intended to access the feed providing site through the information distribution system when the user browses the feed;
a database which stores a browse request for the distributed feed from the user as a browsing history of the user feed by feed;
a user network construction means which generates user significances between a first user and respective other users based on similarities between the browsing histories of the users on the feeds, and creates a user network in accordance with the user significances;
a feed recommendation control means which calculates a recommendation contribution factor of the other users to the first user on the feeds based on the browsing histories of the respective other users in the user network and their user significances to the first user; and
a recommendation feed control means which generates a recommended feed to be recommended to the first user using the recommendation contribution factor.

16. An information distribution system which collects a feed provided by a feed providing site and distributes the same to a user, comprising:
feed distribution means which performs a redirection processing on a feed to be distributed to the user and distributes the feed, the redirection processing being intended to access the feed providing site through the information distribution system when the user browses the feed;
a database which stores a browse request for the distributed feed from the user as a browsing history of the user feed by feed;
a user network construction means which generates user significances between a first user and respective other users based on similarities between the browsing histories of the users on the feeds and creates a user network in accordance with the user significances;
a recommendation feed control means which generates a recommended feed to be recommended to the user based on the browsing histories; and
a feed recommendation control means which calculates a recommendation contribution factor of the other users to the first user on the recommended feed to be distributed to the first user from the browsing histories of the respective other users in the user network on the recommended feed and their user significances to the first user, and provides the recommendation contribution factor as recommendation information on the recommended feed with respect to the first user.

17. The information distribution system according to claim 15, wherein:
the database stores a feed recommendation request from the user who recommends a feed to the other users, as a recommendation history of the user feed by feed;
wherein the feed recommendation control means calculates the recommendation contribution factor of the other users to the first user on the feed based on the browsing histories of the respective other users in the user network, the user significances between the respective other users in the user network and the first user, and the recommendation histories.

18. The information distribution system according to claim 16, wherein the database stores a feed recommendation request from the user who recommends a feed to the other users, as a recommendation history of the user feed by feed; and
the recommended feed control means generates the recommended feed based on the recommendation history or the browsing history.

19. The information distribution system according to claim 18, wherein the feed recommendation control means calculates the recommendation contribution factors of the respective other users on the recommended feed to be distributed to the first user based on the browsing histories of the respective other users in the user network on the recommended feed, the user significances between the respective other users in the user network and the first user, and the recommendation histories, and provides these recommendation contribution factors as the recommendation information on the recommended feed with respect to the first user.

20. The information distribution system according to claim 15, wherein the browsing history includes a total number of views of each feed and an order of browsing of users who have browsed it; and
the feed recommendation control means calculates the recommendation contribution factors of the users on the feed so as to increase the recommendation contribution factors as the users rank higher in the order of browsing in the total number of views.

21. The information distribution system according to claim 16, wherein the browsing history includes a total number of views of each feed and an order of browsing of users who have browsed it; and
the feed recommendation control means calculates the recommendation contribution factors of the users on the feed so as to increase the recommendation contribution factors as the users rank higher in the order of browsing in the total number of views.

22. The information distribution system according to claim 17, wherein the feed recommendation control means calculates the recommendation contribution factors of users in the user network who make a recommendation request for the feed so as to be higher than those of the other users who make no recommendation request for the feed.

23. The information distribution system according to claim 19, wherein the feed recommendation control means calculates the recommendation contribution factors of users in the user network who make a recommendation request for the recommended feed so as to be higher than those of the other users who make no recommendation request for the recommended feed.

24. The information distribution system according to claim 15 or 16, further comprising a feedback control means which provides a feedback function on the feed distributed,
wherein the user network constructionmeans determines whether feedback information from the user is positive or negative and changes the user significances between respective users who contribute to the feed that is fed back and the user who makes the feedback for the feed, depending on a result of determination.

25. The information distribution system according to claim 24, wherein the user network construction means changes the user significances between the respective users who contribute to the feed that is fed back and the user who makes the feedback for the feed, at different rates of increase or decrease according to the recommendation contribution factors depending on a result of determination.

26. The information distribution system according to claim 15 or 16, wherein the browsing history includes a browsing history on tag information associated with each feed.

27. An information distribution apparatus which collects a feed provided by a feed providing site and distributes the same to a user, comprising:
a feed distribution means which performs a redirection processing on a feed to be distributed to the user and distributes the feed, the redirection processing being intended to access the feed providing site through the information distribution apparatus when the user browses the feed;
a database which stores a browse request for the distributed feed from the user as a browsing history of the user feed by feed;
a user network construction means which generates user significances between a first user and respective other users based on similarities between the browsing histories of the users on the feeds, and creates a user network in accordance with the user significances; a feed recommendation control means which calculates a recommendation contribution factor of the other users to the first user on the feeds based on the browsing histories of the respective other users in the user network and their user significances to the first user; and
a recommendation feed control means which generates a recommended feed to be recommended to the first user using the recommendation contribution factor.

28. An information distribution apparatus which collects a feed provided by a feed providing site and distributes the same to a user, comprising:
feed distribution means which performs a redirection processing on a feed to be distributed to the user and distributes the feed, the redirection processing being intended to access the feed providing site through the information distribution apparatus when the user browses the feed;
a database which stores a browse request for the distributed feed from the user as a browsing history of the user feed by feed;
a user network construction means which generates user significances between a first user and respective other users based on similarities between the browsing histories of the users on the feeds and creates a user network in accordance with the user significances;
a recommendation feed control means which generates a recommended feed to be recommended to the user based on the browsing histories; and
a feed recommendation control means which calculates a recommendation contribution factor of the other users to the first user on the recommended feed to be distributed to the first user from the browsing histories of the respective other users in the user network on the recommended feed and their user significances to the first user, and provides the recommendation contribution factor as recommendation information on the recommended feed with respect to the first user.

29. An information distribution method which collects a feed provided by a feed providing site and distributes the same to a user in an information distribution system, comprising the steps of:
performing a redirection processing on a feed to be distributed to the user and distributing the feed, the redirection processing being intended to access the feed providing site through the information distribution system when the user browses the feed;
storing a browse request for the distributed feed from the user as a browsing history of the user feed by feed;
generating user significances between a first user and respective other users based on similarities between the browsing histories of the users on the feeds, and creating a user network in accordance with the user significances;
calculating a recommendation contribution factor of the other users to the first user on the feeds based on the browsing histories of the respective other users in the user network and their user significances to the first user; and
generating a recommended feed to be recommended to the first user using the recommendation contribution factor.

30. An information distribution method which collects a feed provided by a feed providing site and distributes the same to a user in an information distribution system, comprising the steps of:
performing a redirection processing on a feed to be distributed to the user and distributing the feed, the redirection processing being intended to access the feed providing site through the information distribution system when the user browses the feed;
storing a browse request for the distributed feed from the user as a browsing history of the user feed by feed;
generating user significances between a first user and respective other users based on similarities between the browsing histories of the users on the feeds and creating a user network in accordance with the user significances;
generating a recommended feed to be recommended to the user based on the browsing histories; and
calculating a recommendation contribution factor of the other users to the first user on the recommended feed to be distributed to the first user from the browsing histories of the respective other users in the user network on the recommended feed and their user significances to the first user, and providing the recommendation contribution factor as recommendation information on the recommended feed with respect to the first user.
